# EUROPEAN PATENT APPLICATION

(11) **EP 1 947 853 A1**
(43) Date of publication of application: **23.07.2008**
(21) Application number: 06782172.8
(22) Date of filing: 02.08.2006
(51) Int. Cl.: H04N 7/16, G06Q 30/00, G09C 5/00, H04L 9/08

(54) **ENCRYPTED CONTENT AND DECRYPTION KEY PROVIDING SYSTEM**

(30) Priority: 08.08.2005 JP 2005230018
(71) Applicant: MATSUSHITA ELECTRIC INDUSTRIAL CO., LTD., Osaka 571-8501 (JP)
(72) Inventor: YAMAOKA, Masaru c/o Matsushita Electric Industrial Co.,Ltd, 2-1-61, Shiromi,Chuo-ku Osaka-shi, Osaka 540-6207 (JP); SHOJI, Mamoru c/o Matsushita Electric Industrial Co.,Ltd., 2-1-61, Shiromi,Chuo-ku Osaka-shi, Osaka 540-6207 (JP); SATO, Takahiro c/o Matsushita Electric Industrial Co.,Ltd., 2-1-61, Shiromi,Chuo-ku Osaka-shi, Osaka 540-6207 (JP); OSHIMA, Mitsuaki c/o Matsushita Electric Industrial Co.,Ltd., 2-1-61, Shiromi,Chuo-ku Osaka-shi, Osaka 540-6207 (JP); TANAKA, Shinichi c/o Matsushita Electric Industrial Co.,Ltd., 2-1-61, Shiromi,Chuo-ku Osaka-shi, Osaka 540-6207 (JP)
(74) Representative: Schwabe - Sandmair - Marx
(86) International application number: PCT/JP2006/315303
(87) International publication number: WO 2007/018091

(57) **Abstract**

Not only is it possible to let the viewers watch information that an information provider wants watched by the viewers in a reliable manner, but it is also possible to provide the viewers with information that the information provider desires. A content providing server 1 appends an encryption key ID of an encryption key used when encrypting content data to the content data encrypted using the encryption key and transmits the content data appended with the encryption key ID to a content reproduction device 3, while it transmits the encryption key to a CM providing server 2. The CM providing server 2 embeds the encryption key into CM data and transmits the CM data in which is embedded the encryption key corresponding to the encryption key ID that has been received from the content reproduction device 3 to the content reproduction device 3. The content reproduction device 3 transmits the encryption key ID to the CM providing server 2 and reproduces the CM data received from the CM providing server 2 to decrypt the content data using the encryption key embedded in the CM data, after which it reproduces the decrypted content data.

## Description

### Technical Field

The present invention relates to an information management system including a first information providing server that provides first information, a second information providing server that provides second information different from the first information, and a reproduction device that reproduces the first information provided from the first information providing server and the second information provided from the second information providing server, which are interconnected to enable mutual communications, and to an information management method.

The invention also relates to an information providing server and an information providing method for providing information, and a reproduction device, a reproduction method, a reproduction program, a computer-readable recording medium having recorded the reproduction program, and a reproduction control circuit for reproducing information, as well as a recording device, a recording method, a recording program, a computer-readable recording medium having recorded the recording program, and a recording control circuit for recording information.

### Background Art

There is known a recording and reproduction device configured in such a manner that when it records or reproduces a content, such as content information appended with commercial message (hereinafter, abbreviated to CM) information, it records the content while deleting the CM information from the content information or reproduces the content while skipping the CM information. Because the CM information is appended to the content information for advertisement by a sponsor of the content or the broadcast station, in a case where the CM information is deleted or skipped, the CM information will most probably not be passed to the viewers.

Under these circumstances, there has been proposed an information transmission system in which encrypted content information is transmitted while an encryption key of the content information is embedded in the CM information, so that the viewers cannot watch the encrypted content information unless they watch the CM information (for example, see Patent Document 1).

However, it is often with recorded content information that a timing at which the program information is recorded and a timing at which the program information is reproduced are different. Because the CM information and the program information are transmitted simultaneously in the information transmission system of Patent Document 1, when considerable time has passed before the CM information and the program information are reproduced since they were recorded, the CM information becomes outdated and no longer serves as meaningful advertisement. Patent Document 1: ,1P-A-2005-51514

### Disclosure of the Invention

The invention was devised to solve the problems discussed above, and has an object to provide an information management system that not only lets viewers watch information that the information provider wants watched by the viewers in a reliable manner, but also makes it possible to provide the viewers with information that the information provider desires, an information management method, an information providing server, an information providing method, a reproduction device, a reproduction method, a reproduction program, a computer-readable recording medium having recorded the reproduction program, a reproduction control circuit, a recording device, a recording method, a recording program, a computer-readable recording medium having recorded the recording program, and a recording control circuit.

In an aspect of the invention, an information management system including a first information providing server that provides first information, a second information providing server that provides second information different from the first information, and a reproduction device that reproduces the first information provided from the first information providing server and the second information provided from the second information providing server, which are interconnected to enable mutual communications, wherein the first information providing server includes: encryption means for encrypting the first information using an encryption key; encryption key identification information appending means for appending encryption key identification information to identify the encryption key used when encrypting the first information to the first information encrypted by the encryption means; and transmission means for transmitting the first information to which the encryption key identification information is appended by the encryption key identification information appending means to the reproduction device and transmitting the encryption key to the second information providing server, wherein the second information providing server includes: encryption key reception means for receiving the encryption key transmitted by the transmission means in the first information providing server; embedding means for embedding the encryption key received by the encryption key reception means into the second information; encryption key identification information reception means for receiving the encryption key identification information transmitted from the reproduction device; and second information transmission means for transmitting the second information in which is embedded the encryption key corresponding to the encryption key identification information received by the encryption key identification information reception means to the reproduction device, and wherein the reproduction device includes: first information reception means for receiving the first information transmitted by the transmission means in the first information providing server; encryption key identification information transmission means for transmitting the encryption key identification information appended to the first information received by the first information reception means to the second information providing server; second information reception means for receiving the second information transmitted by the second information transmission means in the second information providing server; second information reproduction means for reproducing the second information received by the second information reception means; acquisition means for acquiring the encryption key embedded in the second information reproduced by the second information reproduction means; decryption means for decrypting the first information received by the first information reception means using the encryption key acquired by the acquisition means; and first information reproduction means for reproducing the first information decrypted by the decryption means.

In another aspect of the invention, an information management method for a first information providing server including encryption means, encryption key identification information appending means, and transmission means and providing first information, a second information providing server including encryption key reception means, embedding means, encryption key identification information reception means, and second information transmission means and providing second information different from the first information, and a reproduction device including first information reception means, encryption key identification information transmission means, second information reception means, second information reproduction means, acquisition means, decryption means, and first information reproduction means and reproducing the first information provided from the first information providing server and the second information provided from the second information providing server, which are interconnected to enable mutual communications, includes: an encrypting step of encrypting the first information with the use of an encryption key by the encryption means in the first information providing server; an encryption key identification information appending step of appending, by the encryption key identification information appending means, encryption key identification information to identify the encryption key used when encrypting the first information to the first information encrypted in the encrypting step; a transmitting step of transmitting the first information to which the encryption key identification information is appended in the encryption key identification information appending step to the reproduction device and transmitting the encryption key to the second information providing server by the transmission means; an encryption key receiving step of receiving, by the encryption key reception means in the second information providing server, the encryption key transmitted from the first information providing server in the transmitting step; an embedding step of embedding the encryption key received in the encryption key receiving step into the second information by the embedding means; a first information receiving step of receiving, by the first information reception means in the reproduction device, the first information transmitted from the first information providing server in the transmitting step; an encryption key identification information transmitting step of transmitting the encryption key identification information appended to the first information received in the first information receiving step to the second information providing server by the encryption key identification information transmission means; an encryption key identification information receiving step of receiving, by the encryption key identification information reception means in the second information providing server, the encryption key identification information transmitted from the reproduction device; a second information transmitting step of transmitting the second information in which is embedded the encryption key corresponding to the encryption key identification information received in the encryption key identification information receiving step to the reproduction device by the second information transmission means; a second information receiving step of receiving, by the second information reception means in the reproduction device, the second information transmitted from the second information providing server in the second information transmitting step; a second information reproducing step of reproducing, by the second information reproduction means, the second information received in the second information receiving step; an acquisition step of acquiring, by the acquisition means, the encryption key embedded in the second information reproduced in the second information reproducing step; a decrypting step of decrypting, by the decryption means, the first information received in the first information receiving step with the use of the encryption key acquired in the acquiring step; and a first information reproducing step of reproducing, by the first information reproduction means, the first information decrypted in the decrypting step.

In still another aspect of the invention, an information providing server includes: encryption means for encrypting information to be reproduced in a reproduction device using an encryption key; encryption key identification information appending means for appending encryption key identification information to identify the encryption key used when encrypting the information to the information encrypted by the encryption means; and transmission means for transmitting the information to which the encryption key identification information is appended by the encryption key identification information appending means and the encryption keys.

In still another aspect of the invention, an information providing method includes: an encrypting step of encrypting information to be reproduced in a reproduction device by encryption means with the use of an encryption key; an encryption key identification information appending step of appending, by encryption key identification information appending means, encryption key identification information to identify the encryption key used when encrypting the information to the information encrypted in the encrypting step; and a transmitting step of transmitting the information to which the encryption key identification information is appended in the encryption key identification information appending step and the encryption key by transmission means.

In still another aspect of the invention, an information providing server includes: encryption means for encrypting information to be reproduced in a reproduction device using an encryption key; encryption key identification information appending means for appending encryption key identification information to identify the encryption key used when encrypting the information to the information encrypted by the encryption means; information recording means for recording the information to which the encryption key identification information is appended by the encryption key identification information appending means into a recording medium; and transmission means for transmitting the encryption key.

In still another aspect of the invention, an information providing server includes: encryption key reception means for receiving an encryption key used when encrypting first information; embedding means for embedding the encryption key received by the encryption key reception means into second information different from the first information; encryption key identification information reception means for receiving encryption key identification information to identify the encryption key; and second information transmission means for transmitting the second information in which is embedded the encryption key corresponding to the encryption key identification information received by the encryption key identification information reception means.

In still another aspect of the invention, an information providing method includes: an encryption key receiving step of receiving, by encryption key reception means, an encryption key used when encrypting first information; an embedding step of embedding the encryption key received in the encryption key receiving step into second information different from the first information by embedding means; an encryption key identification information receiving step of receiving encryption key identification information to identify the encryption key by encryption key identification information reception means; and a second information transmitting step of transmitting, by second information transmission means, the second information in which is embedded the encryption key corresponding to the encryption key identification information received in the encryption key identification information receiving step.

In still another aspect of the invention, a reproduction device includes: first information reception means for receiving first information to which is appended encryption key identification information to identify an encryption key used when encrypting the first information; encryption key identification information transmission means for transmitting the encryption key identification information appended to the first information received by the first information reception means; second information reception means for receiving second information which is different from the first information and in which the encryption key corresponding to the encryption key identification information is embedded; second information reproduction means for reproducing the second information received by the second information reception means; acquisition means for acquiring the encryption key embedded in the second information reproduced by the second information reproduction means; decryption means for decrypting the first information received by the first information reception means using the encryption key acquired by the acquisition means; and first information reproduction means for reproducing the first information decrypted by the decryption means.

In still another aspect of the invention, a reproduction method includes: a first information receiving step of receiving, by first information reception means, first information to which is appended encryption key identification information to identify an encryption key used when encrypting the first information; an encryption key identification information transmitting step of transmitting, by encryption key identification information transmission means, the encryption key identification information appended to the first information received in the first information receiving step; a second information receiving step of receiving, by second information reception means, second information which is different from the first information and in which is embedded the encryption key corresponding to the encryption key identification information; a second information reproducing step of reproducing, by second information reproduction means, the second information received in the second information receiving step; an acquiring step of acquiring, by acquisition means, the encryption key embedded in the second information reproduced in the second information reproducing step; a decrypting step of decrypting, by decryption means, the first information received in the first information receiving step with the use of the encryption key acquired in the acquiring step; and a first information reproducing step of reproducing, by first information reproduction means, the first information decrypted in the decrypting step.

In still another aspect of the invention, a reproduction program causes a computer to function as: first information reception means for receiving first information to which is appended encryption key identification information to identify an encryption key used when encrypting the first information; encryption key identification information transmission means for transmitting the encryption key identification information appended to the first information received by the first information reception means; second information reception means for receiving second information which is different from the first information and in which the encryption key corresponding to the encryption key identification information is embedded; second information reproduction means for reproducing the second information received by the second information reception means; acquisition means for acquiring the encryption key embedded in the second information reproduced by the second information reproduction means; decryption means for decrypting the first information received by the first information reception means using the encryption key acquired by the acquisition means; and first information reproduction means for reproducing the first information decrypted by the decryption means.

In still another aspect of the invention, a computer-readable recording medium having recorded a reproduction program has recorded a reproduction program that causes a computer to function as: first information reception means for receiving first information to which is appended encryption key identification information to identify an encryption key used when encrypting the first information; encryption key identification information transmission means for transmitting the encryption key identification information appended to the first information received by the first information reception means; second information reception means for receiving second information which is different from the first information and in which the encryption key corresponding to the encryption key identification information is embedded; second information reproduction means for reproducing the second information received by the second information reception means; acquisition means for acquiring the encryption key embedded in the second information reproduced by the second information reproduction means; decryption means for decrypting the first information received by the first information reception means using the encryption key acquired by the acquisition means; and first information reproduction means for reproducing the first information decrypted by the decryption means.

In still another aspect of the invention, a reproduction control circuit includes: a first information reception instructing circuit that provides an instruction to receive first information to which is appended encryption key identification information to identify an encryption key used when encrypting the first information; an encryption key identification information transmission instructing circuit that provides an instruction to transmit the encryption key identification information appended to the first information received according to the instruction from the first information reception instructing circuit; a second information reception instructing circuit that provides an instruction to receive second information which is different from the first information and in which the encryption key corresponding to the encryption key identification information is embedded; a second information reproduction instructing circuit that provides an instruction to reproduce the second information received according to the instruction from the second information reception instructing circuit; an acquisition instructing circuit that provides an instruction to acquire the encryption key embedded in the second information reproduced according to the instruction from the second information reproduction instructing circuit; a decryption instructing circuit that provides an instruction to decrypt the first information received according to the instruction from the first information reception instructing circuit using the encryption key acquired according to the instruction from the acquisition instructing circuit; and a first information reproduction instructing circuit that provides an instruction to reproduce the first information decrypted according to the instruction from the decryption instructing circuit.

In still another aspect of the invention, a reproduction device includes: first information reading means for reading out first information to which is appended encryption key identification information to identify an encryption key used when encrypting the first information from a recording medium having recorded the first information; encryption key identification information transmission means for transmitting the encryption key identification information appended to the first information read out by the first information reading means; second information reception means for receiving second information which is different from the first information and in which the encryption key corresponding to the encryption key identification information is embedded; second information reproduction means for reproducing the second information received by the second information reception means; acquisition means for acquiring the encryption key embedded in the second information reproduced by the second information reproduction means; decryption means for decrypting the first information read out by the first information reading means using the encryption key acquired by the acquisition means; and first information reproduction means for reproducing the first information decrypted by the decryption means.

In still another aspect of the invention, a recording device includes: first information reception means for receiving first information to which is appended encryption key identification information to identify an encryption key used when encrypting the first information; first information recording means for recording the first information received by the first information reception means; encryption key identification information transmission means for transmitting the encryption key identification information appended to the first information recorded by the first information recording means; second information reception means for receiving second information which is different from the first information and in which the encryption key corresponding to the encryption key identification information is embedded; second information reproduction means for reproducing the second information received by the second information reception means; acquisition means for acquiring the encryption key embedded in the second information reproduced by the second information reproduction means; decryption means for decrypting the first information recorded by the first information recording means using the encryption key acquired by the acquisition means; and first information reproduction means for reproducing the first information decrypted by the decryption means.

In still another aspect of the invention, a recording method includes: a first information receiving step of receiving, by first information reception means, first information to which is appended encryption key identification information to identify an encryption key used when encrypting the first information; a content data recording step of recording, by first information recording means, the first information received in the first information receiving step; an encryption key identification information transmitting step of transmitting, by encryption key identification information transmission means, the encryption key identification information appended to the first information recorded in the first information recording step; a second information receiving step of receiving, by second information reception means, second information which is different from the first information and in which the encryption key corresponding to the encryption key identification information is embedded; a second information reproducing step of reproducing, by second information reproduction means, the second information received in the second information receiving step; an acquiring step of acquiring, by acquisition means, the encryption key embedded in the second information reproduced in the second information reproducing step; a decrypting step of decrypting, by decryption means, the first information recorded in the first information recording step with the use of the encryption key acquired in the acquiring step; and a first information reproducing step of reproducing, by first information reproduction means, the first information decrypted in the decrypting step.

In still another aspect of the invention, a recording program causes a computer to function as: first information reception means for receiving first information to which is appended encryption key identification information to identify an encryption key used when encrypting the first information; first information recording means for recording the first information received by the first information reception means; encryption key identification information transmission means for transmitting the encryption key identification information appended to the first information recorded by the first information recording means; second information reception means for receiving second information which is different from the first information and in which the encryption key corresponding to the encryption key identification information is embedded; second information reproduction means for reproducing the second information received by the second information reception means; acquisition means for acquiring the encryption key embedded in the second information reproduced by the second information reproduction means; decryption means for decrypting the first information recorded by the first information recording means using the encryption key acquired by the acquisition means; and first information reproduction means for reproducing the first information decrypted by the decryption means.

In still another aspect of the invention, a computer-readable recording medium having recorded a recording program has recorded a recording program that causes a computer to function as: first information reception means for receiving first information to which is appended encryption key identification information to identify an encryption key used when encrypting the first information; first information recording means for recording the first information received by the first information reception means; encryption key identification information transmission means for transmitting the encryption key identification information appended to the first information recorded by the first information recording means; second information reception means for receiving second information which is different from the first information and in which the encryption key corresponding to the encryption key identification information is embedded; second information reproduction means for reproducing the second information received by the second information reception means; acquisition means for acquiring the encryption key embedded in the second information reproduced by the second information reproduction means; decryption means for decrypting the first information recorded by the first information recording means using the encryption key acquired by the acquisition means; and first information reproduction means for reproducing the first information decrypted by the decryption means.

In still another aspect of the invention, a recording control circuit includes: a first information reception instructing circuit that provides an instruction to receive first information to which is appended encryption key identification information to identify an encryption key used when encrypting the first information; a first information recording instructing circuit that provides an instruction to record the first information received according to the instruction from the first information reception instructing circuit; an encryption key identification information transmission instructing circuit that provides an instruction to transmit the encryption key identification information appended to the first information recorded according to the instruction from the first information recording instructing circuit; a second information reception instructing circuit that provides an instruction to receive second information which is different from the first information and in which the encryption key corresponding to the encryption key identification information is embedded; a second information reproduction instructing circuit that provides an instruction to reproduce the second information received according to the instruction from the second information reception instructing circuit; an acquisition instructing circuit that provides an instruction to acquire the encryption key embedded in the second information reproduced according to the instruction from the second information reproduction instructing circuit; a decryption instructing circuit that provides an instruction to decrypt the first information recorded according to the instruction from the first information recording instructing circuit using the encryption key acquired according to the instruction from the acquisition instructing circuit; and a first information reproduction instructing circuit that provides an instruction to reproduce the first information decrypted according to the instruction from the decryption instructing circuit.

The above and other objects, features, and advantages of the invention will become more apparent from the following detailed descriptions with reference to the accompanying drawings.

### Brief Description of the Drawings

Fig. 1 is a block diagram showing the configuration of a content management system according to one embodiment of the invention.
Fig. 2 is a block diagram showing the configuration of a content providing server shown in Fig. 1.
Fig. 3 is a view showing an example of a content list stored in a content list storage portion.
Fig. 4 is a block diagram showing the configuration of a CM providing server shown in Fig. 1.
Fig. 5 is a view showing an example of a CM data list stored in a CM data list storage portion.
Fig. 6 is a block diagram showing the configuration of a content reproduction device shown in Fig. 1.
Fig. 7 is a block diagram showing the configuration of a reproduction control circuit according to the embodiment.
Fig. 8 is a first flowchart used to describe content transmission processing in the content management system shown in Fig. 1.
Fig. 9 is a second flowchart used to describe the content transmission processing in the content management system shown in Fig. 1.
Fig. 10 is a first flowchart used to describe content reproduction processing in the content management system shown in Fig. 1.
Fig. 11 is a second flowchart used to describe the content reproduction processing in the content management system shown in Fig. 1.
Fig. 12 is a schematic view used to concretely describe generation of content data in the content providing server.
Fig. 13 is a schematic view used to concretely describe insertion of digital watermarks into CM data in the CM providing server.
Fig. 14 is a view showing an example of a display screen in a case where the CM data is reproduced in a portion on the display screen.
Fig. 15 is a block diagram showing the configuration of a content recording device according to the embodiment.
Fig. 16 is a block diagram showing the configuration of a recording control circuit according to the embodiment.
Fig. 17 is a block diagram showing the configuration of a content providing server according to another embodiment.
Fig. 18 is a block diagram showing the configuration of a content reproduction device according to the another embodiment.

### Best Mode for Carrying Out the Invention

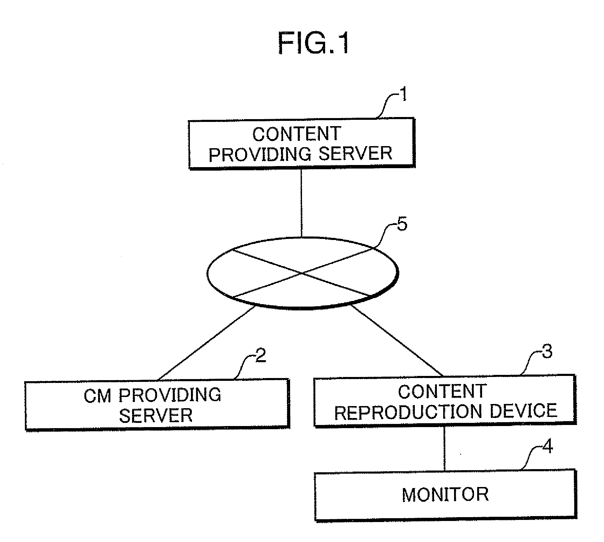

Hereinafter, a content management system according to the invention will be described with reference to the drawings. Fig. 1 is a block diagram showing the configuration of a content management system according to one embodiment of the invention.

The content management system shown in Fig. 1. is formed by including a content providing server 1 that provides content data, a CM providing server 2 that provides commercial message (hereinafter, abbreviated to CM) data, and a content reproduction device 3 that reproduces the content data provided from the content providing server 1 and the CM data provided from the CM providing server 2. Herein, the content data is referred to simply as "content" and the CM data is referred to simply as "CM" to the extent appropriate.

The content providing server 1 is a server operated, for example, by a broadcast station and provides a content, such as a program to be broadcasted by the broadcast station. The content reproduction device 3 is a DVD recorder or the like installed at home and reproduces the content provided from the content providing server 1 and the CM provided from the CM providing server 2.

The content providing server 1, the CM providing server 2, and the content reproduction device 3 are interconnected via a network 5 to enable mutual communications. As the network 5, for example, the Internet, a public telephone line, or the like is used.

The content reproduction device 3 is connected to a monitor 4. The monitor 4 provides the content reproduced by the content reproduction device 3 to a user (viewer) by displaying the content thereon. In this embodiment, the monitor 4 displays the content reproduced by the content reproduction device 3. The invention, however, is not particularly limited to this configuration, and the content reproduction device 3 may have the capability of the monitor 4.

Also, in this embodiment, one content providing server 1 and one CM providing server 2 are provided. The invention, however, is not particularly limited to this configuration, and the content providing server 1 and the CM providing server 2 may be provided in a plural form for respective broadcast stations. Further, the content reproduction device 3 may be provided in a plural form for respective homes.

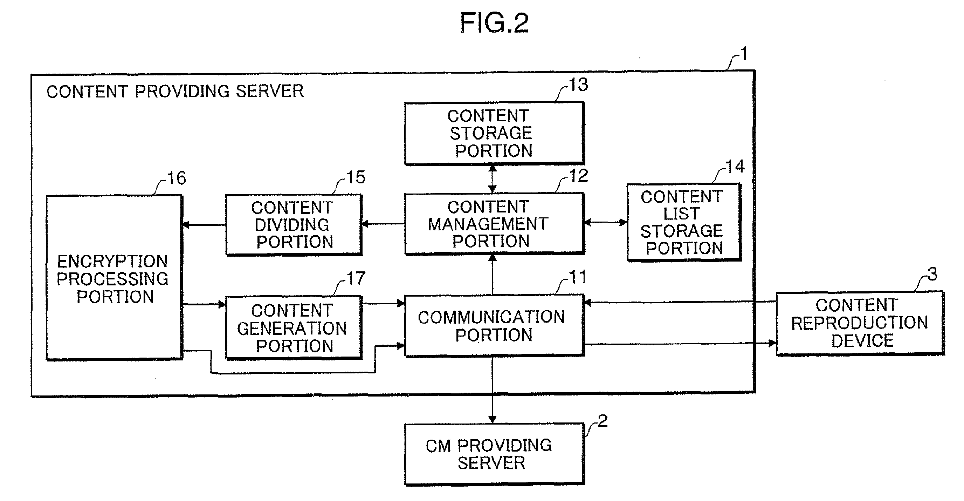

Fig. 2 is a block diagram showing the configuration of the content providing server 1 shown in Fig. 1. The content providing server 1 shown in Fig. 2 is formed by including a communication portion 11, a content management portion 12, a content storage portion 13, a content list storage portion 14, a content dividing portion 15, an encryption processing portion 16, and a content generation portion 17.

The content storage portion 13 stores plural content data. The content data is program data that a broadcast station transmits in the form of airwaves, and includes at least one of image data and sound data. Generally, program data transmitted from a broadcast station contains CM information whereas the content data does not contain CM information. Also, the CM data is commercial information provided in the form of a moving image, a still image, a sound, and characters.

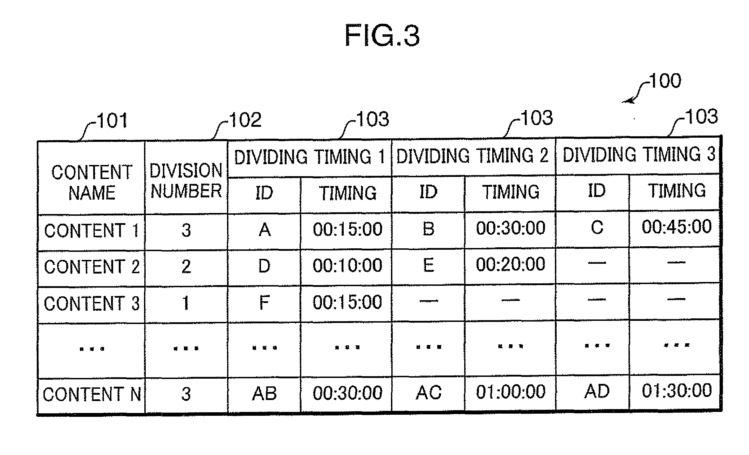

The content list storage portion 14 stores dividing positions to divide content data into plural parts for each content data. Fig. 3 is a view showing one example of the content list stored in the content list storage portion 14.

As is shown in Fig. 3, a content list 100 is formed of a content name 101 indicating the names of contents, a division number 102 specifying the number by which a content is divided, and dividing timings 103 each specifying a timing at which a content is divided. In the content name 101, content names, such as "content 1", "content 2", "content 3", ..., and "content N" are stored. In the division number 102, division numbers, such as "3,", "2", and " 1 " , are stored. In the dividing timings 103, timings at which one content is divided and identification information (ID's) to identify the divided contents thus divided are stored.

For example, referring to Fig. 3, a content named as "content 1" is divided into three divided contents and the respective divided contents have ID's, "A", "B", and "C" . The divided content A is divided at the timing of "00:15;00", the divided content B is divided at the timing of "00:30:00", and the divided content C is divided at the timing of "00:45:00". In other words, the content 1 is divided into the divided content A starting from 0 minute and lasting for 15 minutes, the divided content B starting after a lapse of 15 minutes and lasting until a lapse of 30 minutes, and the divided content C starting after a lapse of 30 minutes and lasting until a lapse of 45 minutes.

Referring to Fig. 2 again, the communication portion 11 receives a content request transmitted from the content reproduction device 3. The content request contains information specifying the content that the viewer wishes to be reproduced. The content management portion 12 reads out the content data stored in the content storage portion 13 according to the content request received at the communication portion 11, and outputs the content data to the content dividing portion 15. Also, the content management portion 12 refers to the content list stored in the content list storage portion 14 and outputs the dividing timings of the read content data to the content dividing portion 15.

The content dividing portion 15 divides the content data into plural divided content data according to the dividing timings, and outputs the respective divided content data thus divided to the encryption processing portion 16. The encryption processing portion 16 encrypts the content data using encryption keys. The encryption processing portion 16 encrypts the respective divided content data using encryption keys that are all different, and outputs the encrypted content data to the content generation portion 17. Also, the encryption processing portion 16 outputs the encryption keys used in the encryption processing to the communication portion 11. In this embodiment, respective divided content data are encrypted with the use of encryption keys that are all different. The invention, however, is not particularly limited to this configuration, and all the divided content data may be encrypted with the use of the same encryption key.

The content generation portion 17 appends an encryption key request timing at which the content reproduction device 3 requests an encryption key to the CM providing server 2, a CM data reproduction timing at which CM is reproduced, and an encryption key ID of the encryption key used in the encryption processing to each divided content data encrypted by the encryption processing portion 16, and generates one content data by synthesizing all the divided content data each appended with the encryption key request timing, the CM data reproduction timing, and the encryption key ID.

The communication portion 11 transmits the content data to which the encryption key request timings, the CM data reproduction timings, and the encryption key ID's are appended by the content generation portion 17 to the content reproduction device 3, while it transmits encryption key information that correlates the encryption keys used by the encryption processing portion 16 with the encryption key ID's to the CM providing server 2.

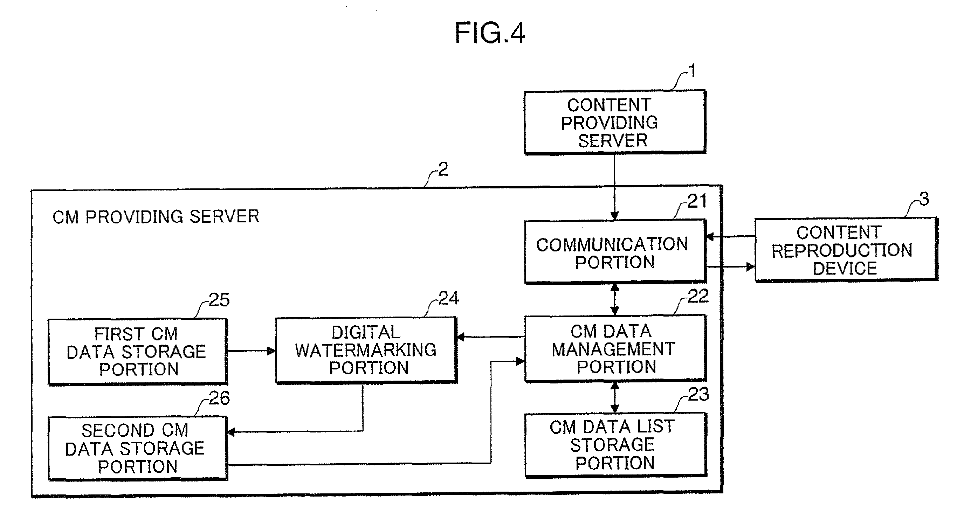

Fig. 4 is a block diagram showing the configuration of the CM providing server 2 shown in Fig. 1. The CM providing server 2 shown in Fig. 4 is formed by including a communication portion 21, a CM data management portion 22, a CM data list storage portion 23, a digital watermarking portion 24, a first CM data storage portion 25, and a second CM data storage portion 26.

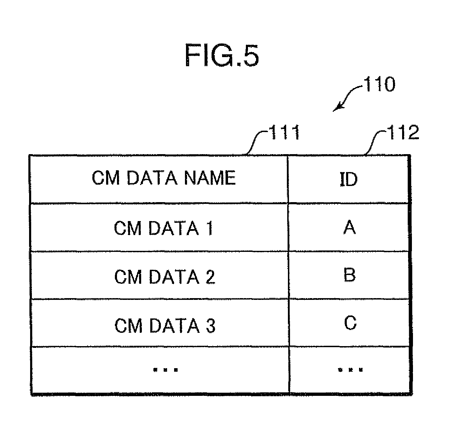

The communication portion 21 receives the encryption key information transmitted from the communication portion 11 in the content providing server 1 and outputs the encryption key information to the CM data management portion 22. The CM data list storage portion 23 stores the encryption key ID's in correlation with the CM data. Fig. 5 is a view showing an example of the CM data list stored in the CM data list storage portion 23.

A CM data list 110 shown in Fig. 5 is formed of a CM data name 111 and an encryption key ID 112. In the CM data name 111, CM data names, such as "CM data 1" , "CM data 2", and "CM data 3", are stored. In the encryption key ID 112, encryption key ID's of encryption keys corresponding to respective CM data, such as "A", "B" , and "C", are stored.

Referring to Fig. 4 again, the CM data management portion 22 outputs the encryption keys contained in the encryption key information received at the communication portion 21 to the digital watermarking portion 24. Also, the CM data management portion 22 refers to the CM data list stored in the CM data list storage portion 23, and outputs the CM data names corresponding to the encryption key ID's contained in the encryption key information received at the communication portion 21, and outputs the CM data names to the digital watermarking portion 24.

The digital watermarking portion 24 reads out CM data corresponding to the CM data names that have been outputted from the CM data management portion 22 from the first CM data storage portion 25 to embed the encryption keys in the read CM data as digital watermarks, and stores the CM data in which are embedded the encryption keys into the second CM data storage portion 26.

In this embodiment, the digital watermarking technique to embed an encryption key in a sample value of moving image information, still image information, or sound information of CM data, the digital watermarking technique to embed an encryption key in the frequency component of moving image information, still image information or sound information of CM data, or the like is used.

As has been described, because the encryption keys are embedded in the sample value or the frequency component of the moving image information, the still image information, or the sound information of CM data as the digital watermark information, it is possible to reproduce the CM data without letting the user be aware that the encryption key is embedded in the CM data. The first CM data storage portion 25 stores plural CM data. The second CM data storage portion 26 stores the CM data in each of which the encryption key is embedded by the digital watermarking portion 24.

Also, the communication portion 21 receives an encryption key request transmitted from the content reproduction device 3 and outputs the encryption key request to the CM data management portion 22. The CM data management portion 22 reads out the CM data in which is embedded the encryption key corresponding to the encryption key ID contained in the encryption key request from the second CM data storage portion 26 and outputs the CM data to the communication portion 21. The communication portion 21 transmits the CM data read out by the CM data management portion 22 to the content reproduction device 3.

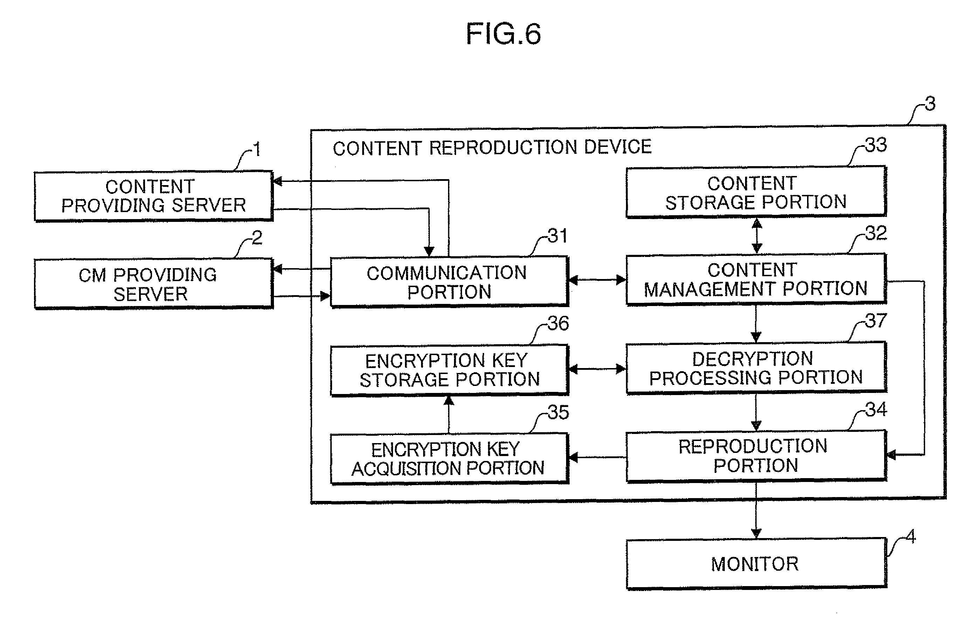

Fig. 6 is a block diagram showing the configuration of the content reproduction device 3 shown in Fig. 1. The content reproduction device 3 shown in Fig. 6 is formed by including a communication portion 31, a content management portion 32, a content storage portion 33, a reproduction portion 34, an encryption key acquisition portion 35, an encryption key storage portion 36, and a decryption processing portion 37.

The communication portion 31 transmits a content request requesting content data to the content providing server 1 while it receives the content data transmitted from the communication portion 11 in the content providing server 1 and outputs the content data to the content management portion 32. An unillustrated operation portion accepts a selection of the content desired by the viewer. The communication portion 31 transmits a content request containing content specifying information to specify the accepted content to the content providing server 1. Also, the communication portion 31 transmits an encryption key request requesting an encryption key to the CM providing server 2 while it receives the CM data transmitted from the communication portion 21 in the CM providing server 2 and outputs the CM data to the content management portion 32.

The content storage portion 33 stores the content data transmitted from the content providing server 1. The content management portion 32 stores the content data outputted from the communication portion 31 in the content storage portion 33. The content management portion 32 reads out the encryption key request timing, the CM data reproduction timing, and the encryption key ID from the content data stored in the content storage portion 33 and generates and outputs an encryption key request containing the encryption key ID to the communication portion 31 according to the encryption key request timing.

In a case where the content data stored in the content storage portion 33 is made of plural divided content data, the content management portion 32 reads out the encryption key request timings, the CM data reproduction timings, and the encryption key ID's appended to the respective divided content data, and generates and outputs the encryption key requests containing the encryption key ID's to the communication portion 31 according to the encryption key request timings.

The content management portion 32 outputs the CM data outputted from the communication portion 31 to the reproduction portion 34 according to the CM data reproduction timing. The reproduction portion 34 reproduces the CM data outputted from the content management portion 32 so as to be displayed on the monitor 4. The encryption key acquisition portion 35 acquires the encryption key embedded in the CM data reproduced by the reproduction portion 34 and outputs the encryption key to the encryption key storage portion 36.

The encryption key acquisition portion 35 acquires the encryption key from the digital watermark information embedded in the sample value of the moving image information, the still image information or the sound information of the CM data, or the digital watermark information embedded in the frequency component of the moving image information, the still image information, or the sound information of the CM data. As has been described, because the encryption key is acquired from the digital watermark information embedded in the sample value or the frequency component of the moving image information, the still image information, or the sound information of the CM data, it is possible to reproduce the CM data without letting the user be aware that the encryption key is embedded in the CM data. The encryption key storage portion 36 stores the encryption key acquired by the encryption key acquisition portion 35.

Also, the encryption key storage portion 36 of this embodiment is formed of, for example, a semiconductor memory, such as a RAM (Random Access Memory) and an EEPROM (Electrically Erasable Programmable Read Only Memory), an external memory device, such as a hard disc, and an IC card, such as a B-CAS (BS-Conditional Access Systems) card. In a case where the encryption key is stored in the B-CAS card, the content reproduction device 3 is further provided with a card access portion to enable an access to the B-CAS card. The card access portion stores encryption keys acquired by the encryption key acquisition portion 35 in the B-CAS card in correlation with the encryption key identification information appended to the content data received at the communication portion 31.

The content management portion 32 outputs the content data (divided content data) outputted from the communication portion 31 to the decryption processing portion 37. The decryption processing portion 37 reads out from the encryption key storage portion 36 the encryption key that will be used to decrypt the content data outputted from the content management portion 32 and decrypts the encrypted content data using the encryption key thus read out, after which it outputs the decrypted content data to the reproduction portion 34. The reproduction portion 34 then reproduces the content data outputted from the decryption processing portion 37 so as to be displayed on the monitor 4.

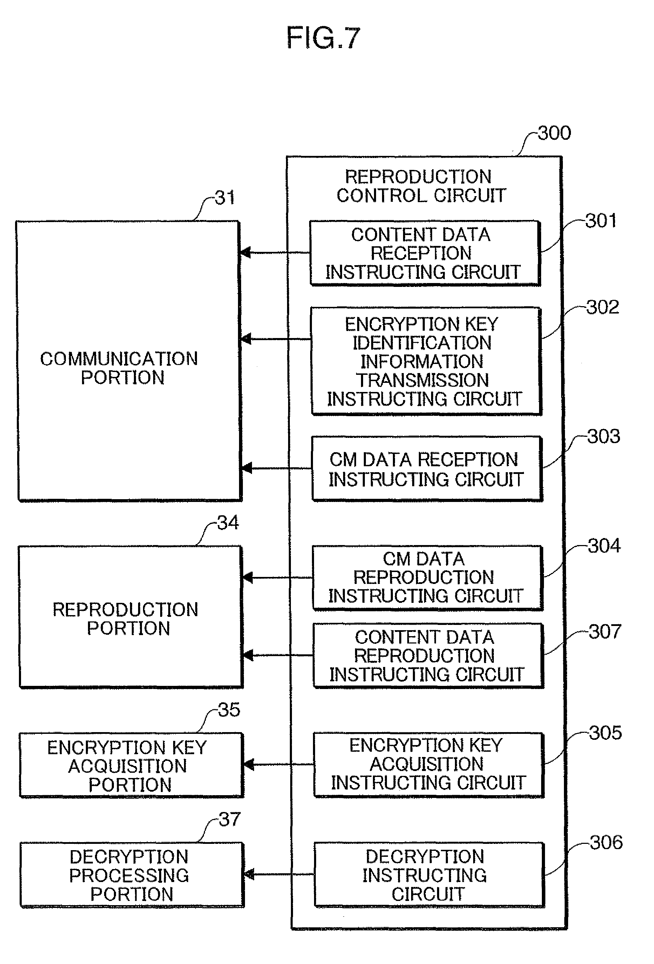

A reproduction control circuit of this embodiment will now be described. Fig. 7 is a block diagram showing the configuration of the reproduction control circuit of this embodiment. A reproduction control circuit 300 shown in Fig. 7 is formed by including a content data reception instructing circuit 301, an encryption key identification information transmission instructing circuit 302, a CM data reception instructing circuit 303, a CM data reproduction instructing circuit 304, an encryption key acquisition instructing circuit 305, a decryption instructing circuit 306, and a content data reproduction instructing circuit 307. The reproduction control circuit 300 is formed of, for example, an LSI (Large-Scale Integrated circuit) or the like, and controls the respective portions in the reproduction device 3, such as the communication portion 31, the reproduction portion 34, the encryption key acquisition portion 35, and the decryption processing portion 37.

The content data reception instructing circuit 301 provides an instruction for the communication portion 31 to receive the content data appended with the encryption key identification information to identify an encryption key used when encrypting the content data. The encryption key identification information transmission instructing circuit 302 provides an instruction for the communication portion 31 to transmit the encryption key identification information appended to the content data received according to the instruction from the content data reception instructing circuit 301.

The CM data reception instructing circuit 303 provides an instruction for the communication portion 31 to receive the CM data in which the encryption key corresponding to the encryption key identification information is embedded. The CM data reproduction processing circuit 304 provides an instruction for the reproduction portion 34 to reproduce the CM data received according to the instruction from the CM data reception instructing circuit 303. The encryption key acquisition instructing circuit 305 provides an instruction for the encryption key acquisition portion 35 to acquire the encryption key embedded in the CM data reproduced according to the instruction from the CM data reproduction instructing circuit 304.

The encryption instructing circuit 306 provides an instruction for the decryption processing portion 37 to decrypt the content data received according to the instruction from the content data reception instructing circuit 301 using the encryption key acquired according to the instruction from the encryption key acquisition instructing circuit 305. The content data reproduction instructing circuit 307 provides an instruction for the reproduction portion 34 to reproduce the content data decrypted according to the instruction from the decryption instructing circuit 306.

In the content reproduction device 3 of this embodiment, the reproduction program is stored, for example, in a ROM (Read Only Memory), and the reproduction program causes the CPU (Central Processing Unit) to function as the communication portion 31, the content management portion 32, the content storage portion 33, the reproduction portion 34, the encryption key acquisition portion 35, the encryption key storage portion 36, and the decryption processing portion 37.

In this embodiment, the content management system corresponds to an example of the information management system, the content providing server 1 corresponds to an example of the information providing server, the CM providing server 2 corresponds to an example of the information providing server, the content reproduction device 3 corresponds to an example of the reproduction device, the content data corresponds to the first information, and the CM data corresponds to an example of the second information.

Also, in this embodiment, the encryption processing portion 16 corresponds to an example of the encryption means, the content generation portion 17 corresponds to an example of the encryption key identification information appending means and the reproduction timing appending means, the communication portion 11 in the content providing server 1 corresponds to an example of the transmission means, and the content dividing portion 15 corresponds to an example of the dividing means. In addition, in this embodiment, the communication portion 21 in the CM providing server 2 corresponds to an example of the encryption key reception means, the encryption key identification information reception means, and the commercial message data transmission means, and the digital watermarking portion 24 corresponds to an example of the embedding means.

Further, in this embodiment, the communication portion 31 in the content reproduction device 3 corresponds to an example of the content data reception means, the encryption key identification information transmission means, and the commercial message data reception means, the content storage portion 33 corresponds to an example of the content data recording means, the reproduction portion 34 corresponds to an example of the commercial message data reproduction means and the content data reproduction means, the encryption key acquisition portion 35 corresponds to an example of the acquisition means, the encryption key storage portion 36 corresponds to an example of the storage means, and the decryption processing portion 37 corresponds to an example of the decryption means.

Furthermore, in this embodiment, the reproduction control circuit 300 corresponds to an example of the reproduction control circuit, the content data reception instructing circuit 301 corresponds to an example of the first information reception instructing circuit, the encryption key identification information transmission instructing circuit 302 corresponds to an example of the encryption key identification information transmission instructing circuit, the CM data reception instructing circuit 303 corresponds to an example of the second information reception instructing circuit, the CM data reproduction instructing circuit 304 corresponds to an example of the second information reproduction instructing circuit, the encryption key acquisition instructing circuit 305 corresponds to an example of the acquisition instructing circuit, the decryption instructing circuit 306 corresponds to an example of the decryption instructing circuit, and the content data reproduction instructing circuit 307 corresponds to an example of the first information reproduction instructing circuit.

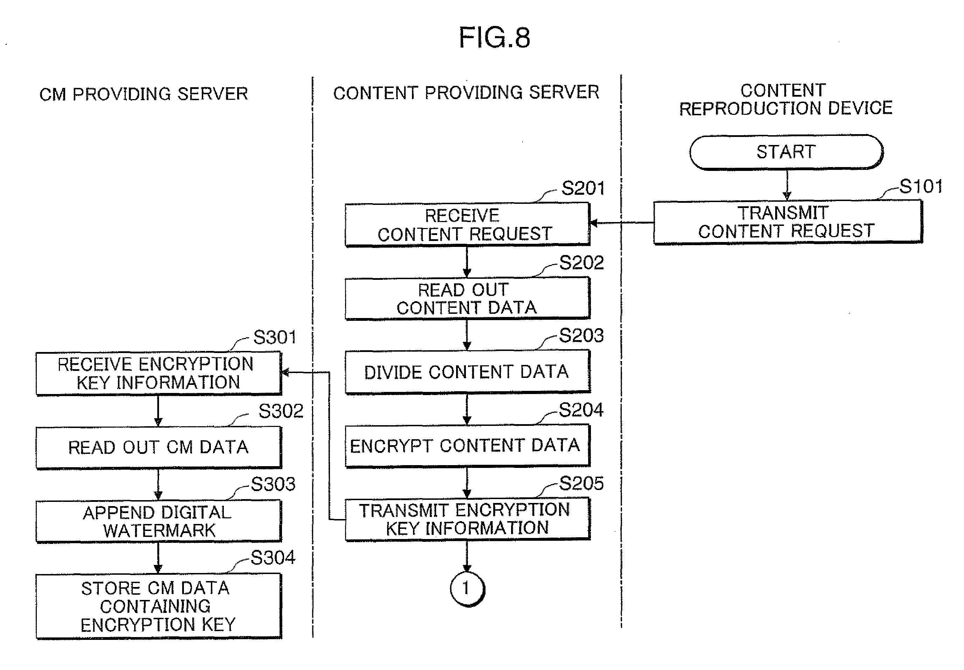

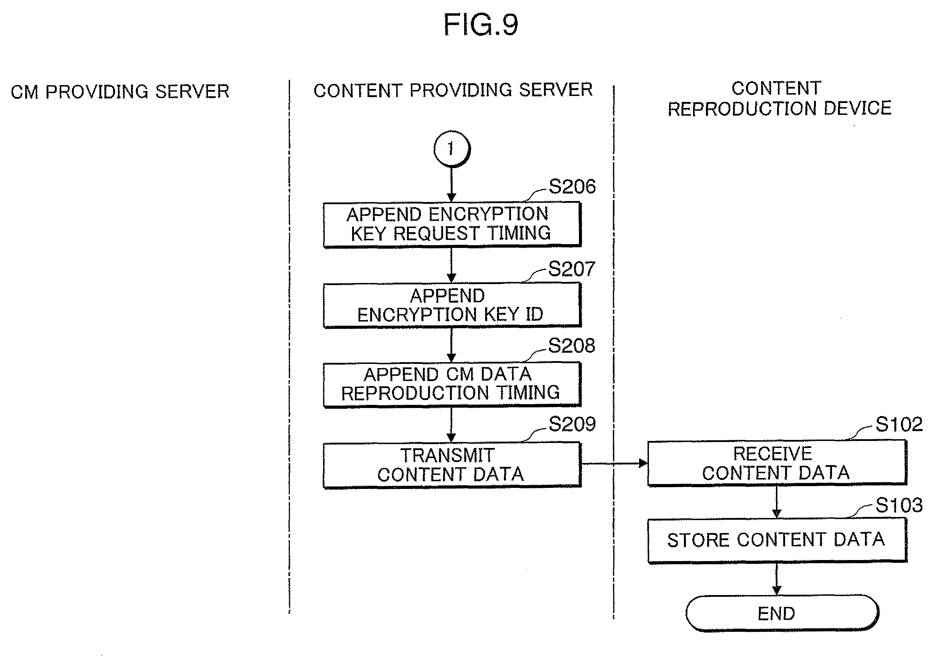

Operations of the content management system configured as described above will now be described. In the following description, operations of the content management system will be described separately for content transmission processing and content reproduction processing. Fig. 8 and Fig. 9 are flowcharts used to describe the content transmission processing in the content management system shown in Fig. 1.

Initially, in Step S101, the communication portion 31 in the content reproduction device 3 transmits a content request requesting transmission of content data to the content providing server 1. Subsequently, in Step S201, the communication portion 11 in the content providing server 1 receives the content request transmitted from the communication portion 31 in the content reproduction device 3. The content request contains content specifying information that specifies the content that the user desires. The communication portion 11 then outputs the content specifying information contained in the content request to the content management portion 12.

Subsequently, in Step S202, the content management portion 12 reads out the content data stored in the content storage portion 13 according to the content specifying information outputted from the communication portion 11 and outputs the content data to the content dividing portion 15. The content management portion 12 also refers to the content list stored in the content list storage portion 14 and outputs the division number and the dividing timings for the content data that has been read out to the content dividing portion 15. It should be noted that each dividing timing contains the ID to identify one divided content data obtained by dividing the content data and the time when the content data is divided.

Subsequently, in Step S203, the content dividing portion 15 divides the content data outputted from the content management portion 12 and outputs the respective divided content data thus divided to the encryption processing portion 16. In this instance, the content dividing portion 15 divides the content data according to the division number and the dividing timings outputted from the content management portion 12.

Subsequently, in Step S204, the encryption processing portion 16 encrypts the respective divided content data outputted from the content dividing portion 15 using encryption keys that are all different, and outputs the encrypted divided content data to the content generation portion 17. The encryption processing portion 16 outputs the encryption keys used when encrypting the respective divided content data correlated with the encryption key ID's to identify these encryption keys to the communication portion 11.

Subsequently, in Step S205, the communication portion 11 transmits the encryption key information, in which the encryption keys used when encrypting the respective divided content data are correlated with the encryption key ID's, to the CM providing server 2. Subsequently, in Step S301, the communication portion 21 in the CM providing server 2 receives the encryption key information transmitted from the communication portion 11 in the content providing server 1, and outputs the received encryption key information to the CM data management portion 22. The CM data management portion 22 outputs the encryption keys contained in the received encryption key information to the digital watermarking portion 24. The CM data management portion 22 also refers to the CM data list stored in the CM data list storage portion 23 and outputs the CM data names correlated with the encryption key ID's contained in the encryption key information to the digital watermarking portion 24.

Subsequently, in Step S302, the digital watermarking portion 24 reads out the CM data corresponding to the CM data names that have been outputted from the CM data management portion 22 from the first CM data storage portion 25. Subsequently, in Step S303, the digital watermarking portion 24 embeds the encryption keys outputted from the CM data management portion 22 in the CM data read out from the first CM data storage portion 25 as digital watermarks. Subsequently, in Step S304, the digital watermarking portion 24 stores the CM data in which are embedded the encryption keys in the second CM data storage portion 26.

Meanwhile, after the encryption key information is transmitted from the communication portion 11, in Step S206, the content generation portion 17 appends an encryption key request timing indicating the timing at which the content reproduction device 3 requests the encryption key for each of the plural divided content data outputted from the encryption processing portion 16. The encryption key request timing is set earlier than the timing at which the content data is reproduced.

Subsequently, in Step S207, the content generation portion 17 appends the encryption key ID's to identify the encryption keys used when encrypting the respective divided content data to the respective plural divided content data outputted from the encryption processing portion 16.

Subsequently, in Step S208, the content generation portion 17 appends the reproduction timing at which the CM data is reproduced to each of plural divided content data outputted from the encryption processing portion 16. The reproduction timing is pre-set in response to a period from the time when the content reproduction device 3 transmits the encryption key request to the CM providing server 2 until the time when it receives the CM data from the CM providing server 2. The content generation portion 17 synthesizes the divided content data to which are appended the encryption key request timings, the encryption key TD' s , and the CM data reproduction timings into one content data and outputs this content data to the communication portion 11.

Subsequently, in Step S209, the communication portion 11 transmits the content data made of the respective divided content data to which are appended the encryption key request timings, the encryption key ID's, and the CM data reproduction timings to the content reproduction device 3.

Subsequently, in Step S102, the communication portion 31 in the content reproduction device 3 receives the content data transmitted from the communication portion 11 in the content providing server 1 , and outputs the received content data to the content management portion 32. Subsequently, in Step S103, the content management portion 32 stores the content data outputted from the communication portion 31 in the content storage portion 33.

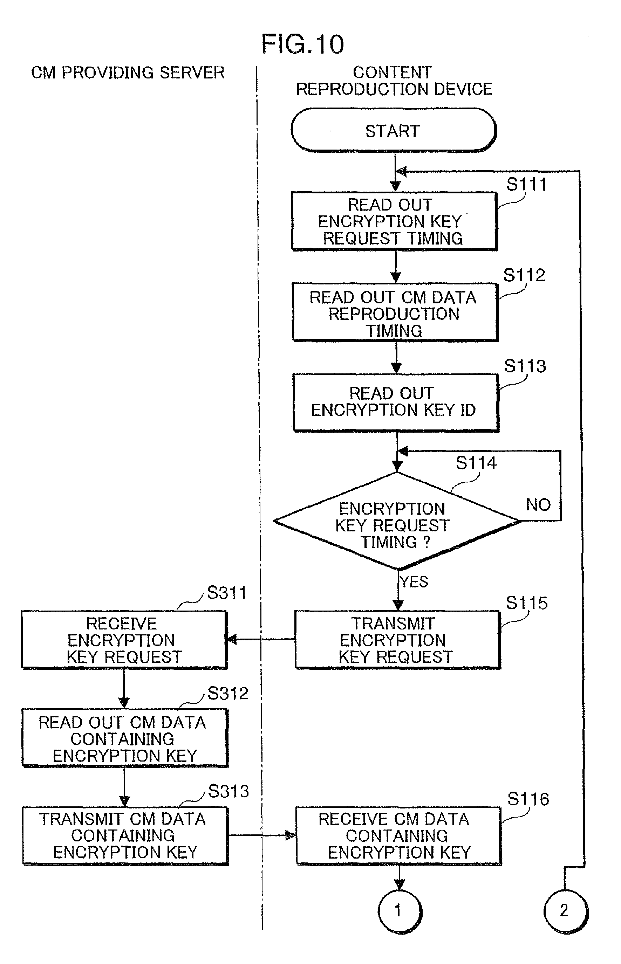

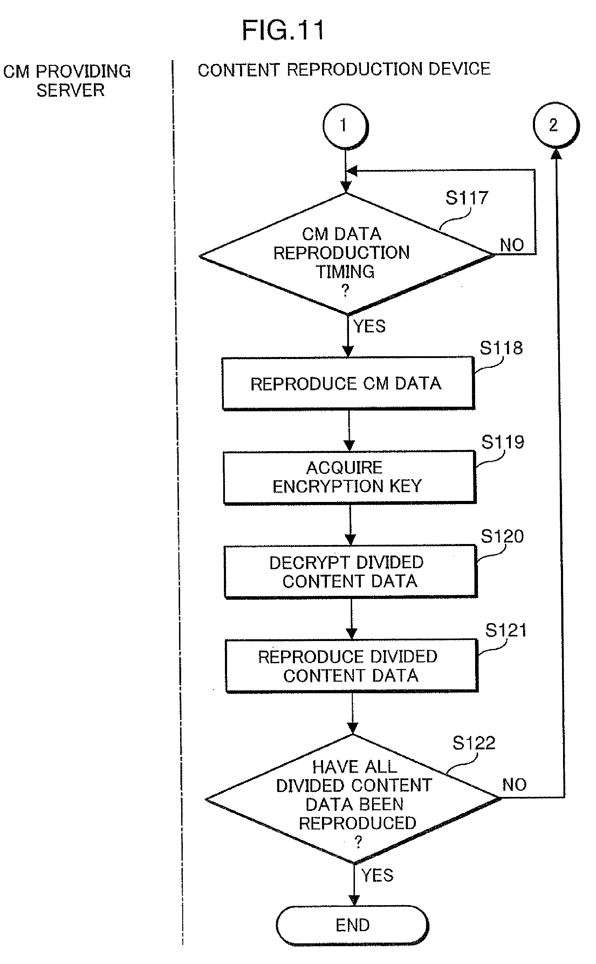

Fig. 10 and Fig. 11 are flowcharts used to describe content reproduction processing in the content management system shown in Fig. 1. The content reproduction processing in the content management system is performed by the content reproduction device 3 and the CM providing server 2.

Initially, in Step S111, the content management portion 32 in the content reproduction device 3 reads out the encryption key request timing appended to the content data stored in the content storage portion 33. In a case where the content data is made of plural divided content data, the content management portion 32 reads out the encryption key request timing appended to the top divided content data. Hereinafter, descriptions will be given on the assumption that the content data is made of plural divided content data. It should be appreciated, however, that the processing is performed in the same manner even in a case where the content data is not divided to plural parts.

Subsequently, in Step S112, the content management portion 32 reads out the CM data reproduction timing appended to the divided content data stored in the content storage portion 33. Subsequently, in Step S113, the content management portion 32 reads out the encryption key ID appended to the divided content data stored in the content storage portion 33.

Subsequently, in Step S114, the content management portion 32 determines whether the encryption key request timing read out from the content storage portion 33 has come. Herein, when it is determined that the encryption key request timing has not come (NO in Step S114), the content management portion 32 remains in a stand-by state until the encryption key request timing comes.

Meanwhile, in a case where it is determined that the encryption key request timing has come (YES in Step S114), in Step S115, the content management portion 32 generates an encryption key request requesting the encryption key from the CM providing server 2 and outputs the encryption key request to the communication portion 31. The encryption key request contains the encryption key ID to identify the encryption key used when encrypting one divided content data that will be reproduced. The communication portion 31 transmits the encryption key request outputted from the content management portion 32 to the CM providing server 2.

Subsequently, in Step S311, the communication portion 21 in the CM providing server 2 receives the encryption key request transmitted from the communication portion 31 in the content reproduction device 3 and outputs the encryption key request to the CM data management portion 22. Subsequently, in Step S312, the CM data management portion 22 reads out from the second CM data storage portion 26 the CM data in which is embedded the encryption key corresponding to the encryption key ID contained in the encryption key request outputted from the communication portion 21, and outputs the CM data to the communication portion 21. Subsequently, in Step S313, the communication portion 21 transmits the CM data outputted from the CM data management portion 22 to the content reproduction device 3.

Subsequently, in Step S116, the communication portion 31 in the content reproduction device 3 receives the CM data transmitted from the communication portion 21 in the CM providing server 2 and outputs the CM data to the content management portion 32. Subsequently, in Step S117, the content management portion 32 determines whether the CM data reproduction timing read out from the content storage portion 33 has come. Herein, in a case where it is determined that the CM data reproduction timing has not come (NO in Step S117), the content management portion 32 remains in a stand-by state until the CM data reproduction timing comes.

Meanwhile, in a case where it is determined that the CM data reproduction timing has come (YES in Step S117), in Step S118, the content management portion 32 outputs the CM data outputted from the communication portion 31 to the reproduction portion 34. The reproduction portion 34 then reproduces the CM data outputted from the content management portion 32 so as to be displayed on the monitor 4.

The monitor 4 may display a sub-window on the display screen to display the CM data inside the sub-window. In a case where the content reproduction device 3 is provided with a remote controller and the remote controller is provided with the display device, the CM data may be displayed on the display device of the remote controller.

Subsequently, in Step S119, the encryption key acquisition portion 35 detects the digital watermark embedded in the CM data reproduced by the reproduction portion 34, and acquires the encryption key contained in the digital watermark thus detected. The encryption key acquisition portion 35 stores the encryption key acquired from the CM data in the encryption key storage portion 36.

Subsequently, in Step S120, the content management portion 32 reads out the divided content data from the content storage portion 33 and outputs the divided content data to the decryption processing portion 37. Upon input of the divided content data, the decryption processing portion 37 reads out the encryption key stored in the encryption key storage portion 36. The encryption processing portion 37 then decrypts the divided content data outputted from the content management portion 32 using the encryption key thus read out. The decryption processing portion 37 then outputs the decrypted divided content data to the reproduction portion 34. Subsequently, in Step S121, the reproduction portion 34 reproduces the divided content data outputted from the decryption processing portion 37 so as to be displayed on the monitor 4.

Subsequently, in Step S122. the content management portion 32 determines whether all the divided content data contained in one content data and stored in the content storage portion 33 have been reproduced. Herein, in a case where it is determined that not all the divided content data have been reproduced (NO in Step S122), the flow returns to the processing in Step S111, so that the content management portion 32 reads out the encryption key request timing of another divided content data stored in the content storage portion 33. Meanwhile, in a case where it is determined that all the divided content data have been reproduced (YES in Step S122), the content management portion 32 ends the content reproduction processing.

In this embodiment, the processing since the transmission of the content request to the content providing server 1 from the content reproduction device 3 until the reproduction of the content data, that is, the content transmission processing shown in Fig. 8 and Fig. 9, and the content reproduction processing shown in Fig. 10 and Fig. 11 are performed continuously. The invention, however, is not particularly limited to this configuration. After the processing since the transmission of the content request from the content reproduction device 3 until the storage of the content data therein, that is, the content transmission processing shown in Fig. 8 and Fig. 9, is performed, the processing since the reading out of the encryption key request timing until the reproduction of the content data, that is, the content reproduction processing shown in Fig. 10 and Fig. 11, may be performed upon receipt of a reproduction instruction from an unillustrated operation portion.

As has been described, in the content providing server 1, the content data is encrypted using encryption keys and the encryption key ID's to identify the encryption keys used when encrypting the content data are appended to the encrypted content data. Accordingly, the content data appended with the encryption key ID' s is transmitted to the content reproduction device 3 while the encryption keys are transmitted to the CM providing server 2. Subsequently, the encryption keys transmitted from the content providing server 1 are received at the CM providing server 2, and each of the received encryption keys is embedded in the CM data therein. The encryption key ID transmitted from the content reproduction device 3 is received, and the CM data in which is embedded the encryption key corresponding to the received encryption key ID is transmitted to the content reproduction device 3. Subsequently, the content data transmitted from the content providing server 1 is received at the content reproduction device 3 and the encryption key ID appended to the received content data is transmitted to the CM providing server 2. The CM data transmitted from the CM providing server 2 is thus received. Accordingly, the CM data is reproduced and the encryption key embedded in the reproduced CM data is acquired. Thereafter, the content data is decrypted with the use of the encryption key and the decrypted content data is reproduced.

Hence, because the content data cannot be decrypted and reproduced unless the encryption key is acquired by reproducing the CM data, it is possible to let the viewers watch the CM that the information provider wants watched by the viewers in a reliable manner. In addition, because the CM in which is embedded the encryption key corresponding to the encryption key identification information appended to the content data is reproduced, by embedding the encryption key in the CM data that the information provider desires, it is possible to provide the viewers with the CM that the information provider desires. For example, by embedding the encryption key in the latest CM data, it is possible to provide the viewers with the latest CM when the content data is reproduced.

In addition, in the content providing server 1, the content data is divided into plural divided content data and the respective divided content data are encrypted with the use of the encryption keys. To each encrypted divided content data, the encryption key ID to identify the encryption key used when encrypting this divided content data is appended, and the respective divided content data appended with the encryption key ID's are transmitted to the content reproduction device 3 while the encryption keys are transmitted to the CM providing server 2. Subsequently, the encryption keys transmitted from the content providing server 1 are received at the CM providing server 2, and the received encryption keys are embedded in the respective CM data corresponding to the respective divided content data. The encryption key ID transmitted from the content reproduction device 3 is then received, and the CM data in which is embedded the encryption key corresponding to the received encryption key ID is transmitted to the content reproduction device 3. Subsequently, the divided content data transmitted from the content providing server 1 is received at the content reproduction device 3 and the encryption key ID appended to the divided content data thus received is transmitted to the CM providing server 2. The CM data transmitted from the CM providing server 2 is then received. Accordingly, the CM data is reproduced and the encryption key embedded in the reproduced CM data is acquired. Thereafter, the divided content data is decrypted with the use of the encryption key and the decrypted divided content data is reproduced.

Hence, the encryption key ID is appended to each divided content data obtained by dividing one content data into plural parts, and the CM in which is embedded the encryption key corresponding to the encryption key ID is reproduced. It is thus possible to provide the viewers with desired CM for each divided content data.

Further, in the content providing server 1, the reproduction timing at which the CM is reproduced is appended to the encrypted content data and the CM data is reproduced in the content reproduction device 3 according to the reproduction timing appended to the content data. Hence, because the CM is reproduced according to the reproduction timing, it is possible to reproduce the CM at desired timing.

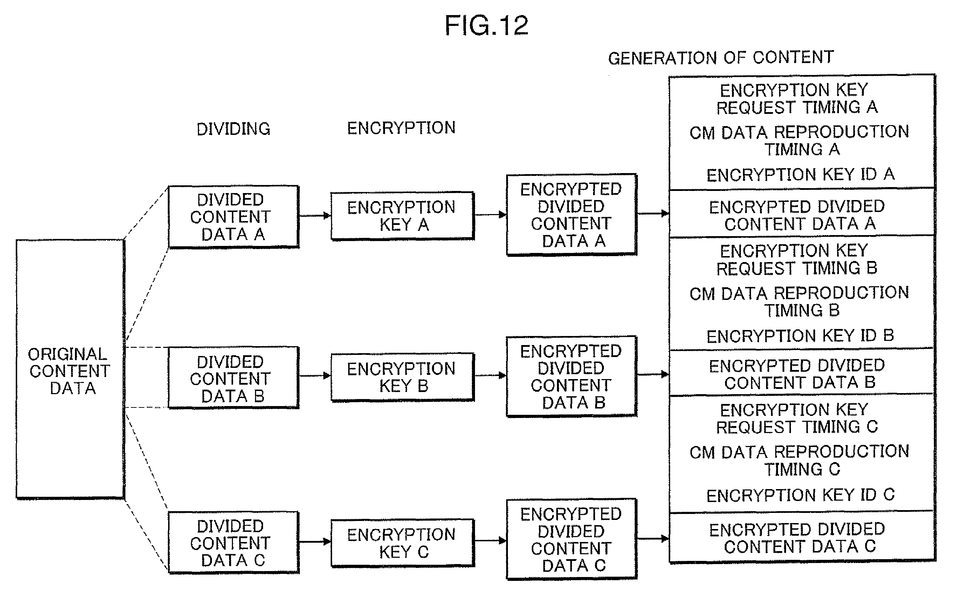

Generation of the content data in the content providing server 1 will now be descried concretely. Fig. 12 is a schematic view used to concretely describe the generation of the content data in the content providing server 1.

As is shown in Fig. 12, the content dividing portion 15 first divides the original content data into plural divided content data according to the division number and the dividing timings pre-set for each content data. In an example shown in Fig. 12, the original content data is divided into three divided content data A, B, and C.

Subsequently, the encryption processing portion 16 encrypts the divided content data A using the encryption key A, encrypts the divided content data B using the encryption key B, and encrypts the content data C using the encryption key C. In this embodiment, the encryption keys A, B, and C used to encrypt the divided content data A, B, and C, respectively, are encryption keys that are all different. However, the encryption keys A, B, and C may be the same encryption key.

Subsequently, the content generation portion 17 appends the encryption key request timings A, B, and C, the CM data reproduction timings A, B, and C, and the encryption key ID's A, B, and C, respectively, to the encrypted divided content data A, B, and C that have been encrypted. The content generation portion 17 then synthesizes the encrypted divided content data A, B, and C appended, respectively, with the encryption key request timings A, B, and C, the CM data reproduction timings A, B, and C, and the encryption key ID's A, B, and C into one content data.

In the example shown in Fig. 12, the encryption key request timing A, the CM data reproduction timing A, and the encryption key ID A are appended to the encrypted divided content data A, the encryption key request timing B. the CM data reproduction timing B, and the encryption key ID B are appended to the encrypted divided content data B, and the encryption key request timing C, the CM data reproduction timing C, and the encryption key ID C are appended to the encrypted divided content data C.

In this embodiment, the encryption key request timings A, B, and C, the CM data reproduction timings A, B, and C, and the encryption key ID's A, B, and C are appended, respectively, to the encrypted divided content data A, B, and C at their head portions. The invention, however, is not particularly limited to this configuration, and the encryption key request timings A, B, and C, the CM data reproducing timings A, B, and C, and the encryption key ID's A, B, and C may be appended to the head portion of the encrypted divided content data A.

In this case, the content reproduction device 3 does not read out the encryption key request timing, the CM data reproduction timing, and the encryption key ID each time one encrypted divided data is reproduced, but reads out the encryption key request timings, the CM data reproduction timings, and the encryption key ID's of all the encrypted divided data before the respective encrypted divided data are reproduced.

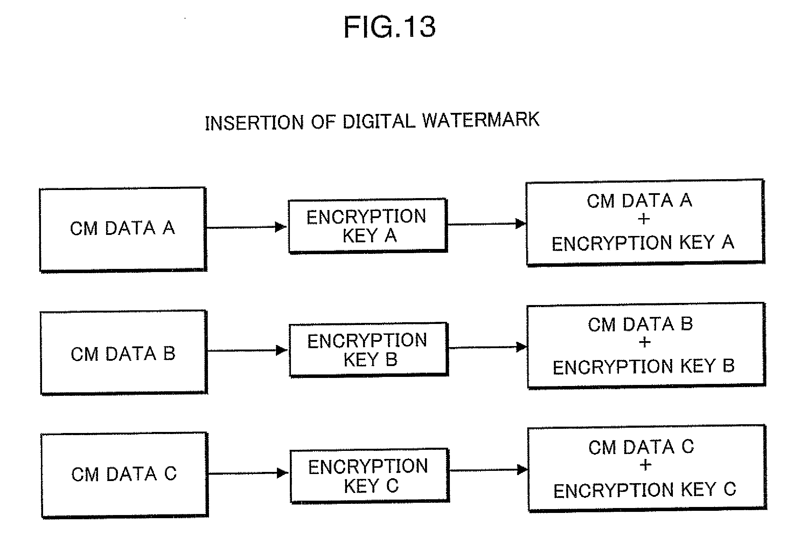

Subsequently, insertion of digital watermarks into the CM data in the CM providing server 2 will be described concretely. Fig. 13 is a schematic view used to concretely describe the insertion of digital watermarks into the CM data in the CM providing server 2.

The communication portion 21 receives the encryption keys A, B, and C correlated with the encryption key ID's A, B, and C, respectively, from the content providing server 1. The CM data management portion 22 specifies the CM data A, B, and C corresponding, respectively, to the encryption key ID's A, B, and C from the CM data list stored in the CM data list storage portion 23. The digital watermarking portion 24 reads out the CM data A, B, and C specified by the CM data management portion 22 from the first CM data storage portion 25, and embeds respectively the encryption keys A, B, and C therein as digital watermarks. The digital watermarking portion 24 stores the CM data A, B, and C in which are respectively embedded the encryption keys A, B, and C as the digital watermarks into the second CM data storage portion 26.

In a case where an encryption key request transmitted by the content reproduction device 3 is received, the CM data in which is embedded the encryption key corresponding to the encryption key ID contained in the encryption key request is read out from the second CM data storage portion 26 and transmitted to the content reproduction device 3.

In this embodiment, the digital watermarking portion 24 embeds the encryption key in the CM data in line with the content of the content data. More specifically, the CM data list storage portion 23 stores the CM data list in which the encryption keys used when encrypting the content data are correlated with the CM data in line with the content of the content data.

As has been described, because the encryption key is embedded in the CM data in line with the content of the content data, it is possible to provide the viewers with the CM in line with the content of the content data the viewers are going to watch, which enhances the advertisement effect of the CM.

Alternatively, the digital watermarking portion 24 may embed the encryption key in CM data that suits the user's taste. More specifically, the content reproduction device 3 accepts an input of a keyword from the user, and transmits the encryption key request containing the accepted keyword to the CM providing server 2. The CM providing server 2 pre-stores keywords in correlation with the CM data relating to the keywords, and reads out the CM data corresponding to the received keyword. The encryption key corresponding to the encryption key ID contained in the encryption key request is then embedded in the CM data thus read out, which is transmitted to the content reproduction device 3.

As has been described, because the encryption key is embedded in the CM data that suits the user's taste, it is possible to provide the user with the CM that suits the user's taste, which makes it possible to provide the CM that the user desires.

The content reproduction device 3 of this embodiment acquires the CM data in which is embedded the encryption key from the CM providing server 2 each time it reproduces the content data. The invention, however, is not particularly limited to this configuration. The content reproduction device 3 may store the encryption key acquired once in the encryption key storage portion 36 in correlation with the encryption key identification information appended to the content data. In a case where an instruction is issued to reproduce the content data for which the encryption key has been already acquired, the encryption key stored in the encryption key storage portion 36 may be read out according to the CM data reproduction timing to decrypt and reproduce the content data without acquiring the CM data in which is embedded the encryption key from the CM providing server 2. In this case, by also storing the CM data in which is embedded the encryption key, not only the content data, but also the CM data can be reproduced according to the CM data reproduction timing.

Alternatively, the CM data received at the communication portion 31 may be stored in correlation with the encryption key identification information appended to the content data. In a case where an instruction is issued to reproduce the content data for which the encryption key has been already acquired, the CM data may be read out and reproduced according to the CM data reproduction timing without acquiring the CM data in which is embedded the encryption key from the CM providing server 2.

As has been described, because the CM data or the encryption key is stored in correlation with the encryption key identification information appended to the content data, it is possible to eliminate the need to receive the encryption key each time the content data is reproduced. The number of accesses to the CM providing server 2 can be thus reduced, which can in turn reduce a network load.

Further, in this embodiment, the CM data is reproduced and displayed on the entire display screen of the monitor 4. The invention, however, is not particularly limited to this configuration, and the CM data may be reproduced and displayed in a portion on the display screen of the monitor 4. In this case, the content generation portion 17 in the content providing server 1 appends reproduction position information that specifies the position on the display screen at which the CM data is to be reproduced to the content data encrypted by the encryption processing portion 16. The reproduction portion 34 in the content reproduction device 3 then reproduces the CM data received at the communication portion 31 on the display screen at the position determined according to the reproduction position information appended to the content data received at the communication portion 31. It should be noted that the content generation portion 17 corresponds to an example of the reproduction position information appending means.

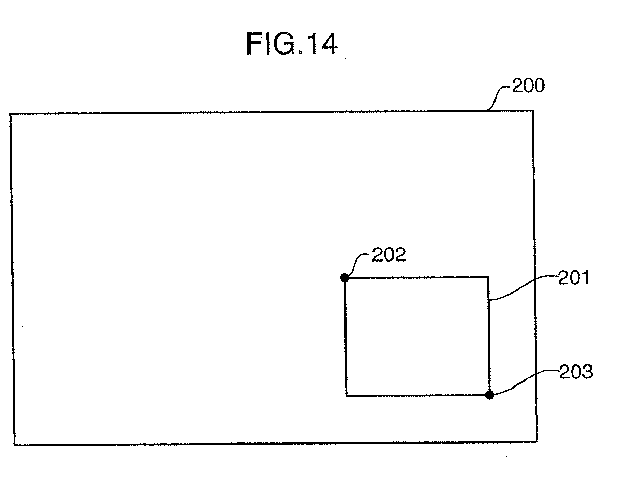

Fig. 14 is a view showing an example of the display screen in a case where the CM data is reproduced in a portion on the display screen. As is shown in Fig. 14, a display screen 200 includes a CM reproduction area 201 used to reproduce the CM data. The content generation portion 17 appends, as the reproduction position information, the coordinate of the upper left portion 202 and the coordinate of the lower right portion 203 in the CM reproduction area 201 on the display screen 200 to the content data. The reproduction portion 34 specifies the position on the display screen 200 of the CM reproduction area 201 according to the reproduction position information appended to the content data, and reproduces the CM data within the CM reproduction area 201 thus specified.

As has been described, in the content providing server 1, the reproduction position information specifying the position on the display screen at which is reproduced the CM data is appended to the encrypted content data, and in the content reproduction device 3, the CM data is reproduced on the display screen at the position determined according to the reproduction position information appended to the content data. It is thus possible to reproduce the CM on the display screen at a desired position instead of reproducing the CM on the entire display screen. The content generation portion 17 may append the reproduction position information and the reproduction timing to the encrypted content data.

Also, the CM data of this embodiment may be character information in addition to the moving image information, the still image information, and the sound information. More specifically, the digital watermarking portion 24 in the CM providing server 2 embeds the encryption key in the character information of the CM data, and the communication portion 21 transmits the CM data in which is embedded the encryption key to the content reproduction device 3. The reproduction portion 34 in the content reproduction device 3 then reproduces the CM data and displays the character information on the monitor 4. The encryption key acquisition portion 35 acquires the encryption key embedded in the CM data reproduced by the reproduction portion 34.

Further, the character information contains an URL (Uniform Resource Locator) to acquire information on the Internet, and the reproduction portion 34 reproduces the CM data to display this URL on the monitor 4. In this instance, the monitor 4 displays the URL to enable a click thereon, and the unillustrated operation portion accepts a click operation on the URL by the user. The content management portion 32 determines whether the URL being displayed is selected by the user. In a case where it is determined that the URL is selected, the decryption processing portion 37 reads out the encryption key to decrypt the content data from the encryption key storage portion 36, and decrypts the content data encrypted using the encryption key thus read out, after which it outputs the decrypted content data to the reproduction portion 34.

As has been described, because the content data is not decrypted unless the user selects the URL displayed on the monitor 4, it is possible to confirm that the user has watched the CM on the ground that the URL was selected.

Further, in a case where the URL is displayed to enable a click thereon and the click operation by the user is accepted, the content management portion 32 may store the clicked URL in its internal memory. Also, the content management portion 32 may read out the URL stored in the memory and display the URL thus read out on the monitor 4 in such a manner so as to enable a click thereon. As has been described, the URL displayed as the CM is clicked and the clicked URL is stored, after which the stored URL is displayed. Hence, the user is able to watch desired information linked to the URL by selecting the URL after he watched the CM or the content.

Also, in this embodiment, the content management system is provided with the content reproduction device 3 that reproduces the content data provided from the content providing server 1 and the CM data provided from the CM providing server 2. The invention, however, is not particularly limited to this configuration. The content management system may be provided with a content recording device that records the content data provided from the content providing server 1.

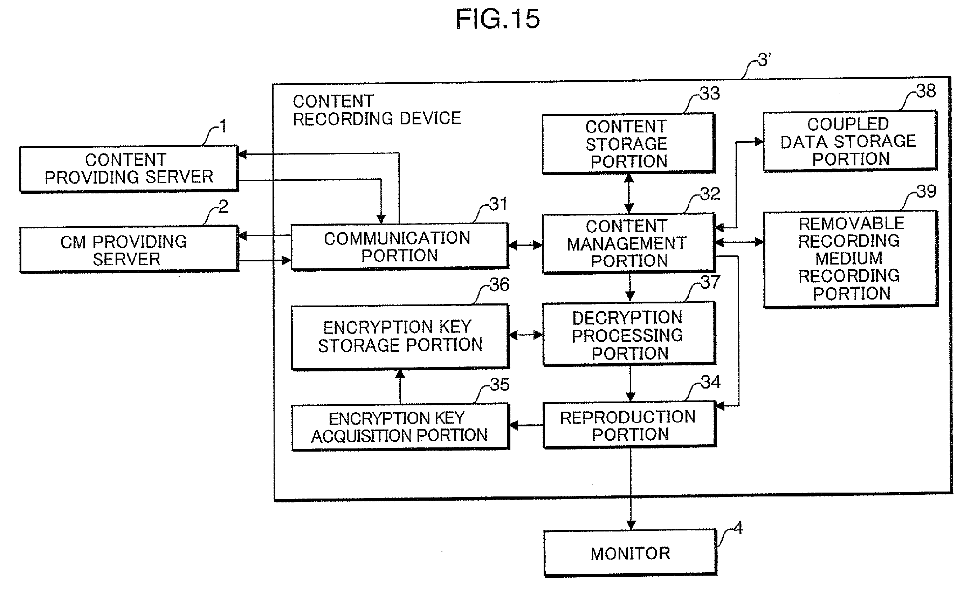

Fig. 15 is a block diagram showing the configuration of the content recording device of this embodiment. In Fig. 15, like configurations are labeled with like reference numerals with respect to Fig. 6 and only different configurations will be described by omitting descriptions of the same configurations.

A content recording device 3' shown in Fig. 15 is formed by including a communication portion 31, a content management portion 32, a content storage portion 33, a reproduction portion 34, an encryption key acquisition portion 35, an encryption key storage portion 36, a decryption processing portion 37, a coupled data storage portion 38, and a removable recording medium recording portion 39.

In a case where the CM data is received at the communication portion 31, the content management portion 32 reads out the content data stored in the content storage portion 33, and the CM data outputted from the communication portion 31 and the content data read out from the content storage portion 33 are coupled to each other. The coupled data thus coupled is stored in the coupled data storage portion 38. The coupled data storage portion 38 stores the coupled data, which is the CM data and the content data coupled to each other. Herein, the content recording device 3' corresponds to an example of the recording device and the coupled data storage portion 38 corresponds to an example of the coupling recording means.

The content management portion 32 does not generate an encryption key request even when the encryption key request timing has come. Instead, it reads out the CM data contained in the coupled data stored in the coupled data storage portion 38 when the CM data reproduction timing has come, and outputs the CM data to the reproduction portion 34. The encryption key embedded in the CM data is thus acquired, and the content data is decrypted with the use of the encryption key thus acquired and reproduced subsequently.

The content management portion 32 outputs the coupled data stored in the coupled data storage portion 38 to the removable recording medium recording portion 39 and controls a recording operation. The removable recording medium recording portion 39 records the coupled data into a removable recording medium. For example, a DVD drive is used as the removable recording medium recording portion 39. Also, as a removable recording medium for recording, optical discs, such as a DVD-RAM, a DVD-R, a CD-RW, a CD-R, a PD (Phase Change Rewritable Disk), and a Blu-ray Disk, are used. Further, the content management portion 32 reads out the coupled data recorded in the removable recording medium by means of the removable recording medium recording portion 39.

As has been described, because the content data and the CM data coupled to each other are recoded, it is possible to record the coupled data, in which the content data and the CM data are coupled to each other, in a removable recording medium. Also, even under a circumstance where it is impossible to receive the CM data, the content data recorded in a removable recording medium can be reproduced. Further, by using the timing at which the CM data is coupled as the CM reproduction timing in the content data, it is possible to reproduce the CM at the timing intended by the provider of the content data.

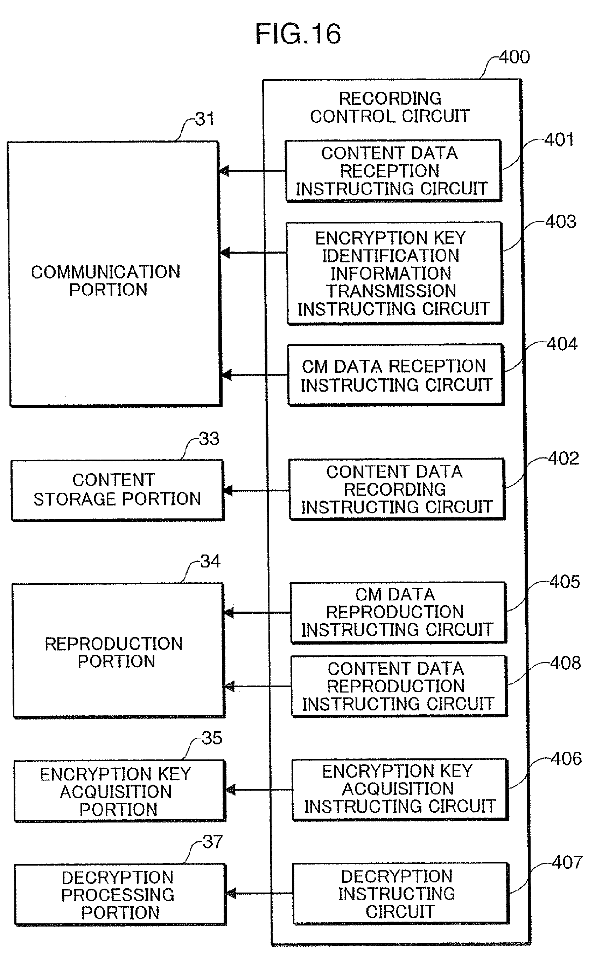

A recording control circuit of this embodiment will now be described. Fig. 16 is a block diagram showing the configuration of the recording control circuit of this embodiment. A recording control circuit 400 shown in Fig. 16 is formed by including a content data reception instructing circuit 401, a content data recording instructing circuit 402, an encryption key identification information transmission instructing circuit 403, a CM data reception instructing circuit 404, a CM data reproduction instructing circuit 405, an encryption key acquisition instructing circuit 406, a decryption instructing circuit 407, and a content data reproduction instructing circuit 408. The recording control circuit 400 is formed of, for example, an LSI (Large-Scale Integrated circuit) or the like, and controls the respective portions in the reproduction device 3, such as the communication portion 31, the content storage portion 33, the reproduction portion 34, the encryption key acquisition portion 35, the decryption processing portion 37, and so forth.

The content data reception instructing circuit 401 provides an instruction for the communication portion 31 to receive the content data appended with the encryption key identification information to identify an encryption key used when encrypting the content data. The content data recording instructing circuit 402 provides an instruction for the content storage portion 33 to record the content data received according to the instruction from the content data reception instructing circuit 401. The encryption key identification information transmission instructing circuit 403 provides an instruction for the communication portion 31 to transmit the encryption key identification information appended to the content data recorded according to the instruction from the content data recording instructing circuit 402.

The CM data reception instructing circuit 404 provides an instruction for the communication portion 31 to receive the CM data in which is embedded the encryption key corresponding to the encryption key identification information. The CM data reproduction instructing circuit 405 provides an instruction for the reproduction portion 34 to reproduce the CM data received according to the instruction from the CM data reception instructing circuit 404. The encryption key acquisition instructing circuit 406 provides an instruction for the encryption key acquisition portion 35 to acquire the encryption key embedded in the CM data reproduced according to the instruction from the CM data reproduction instructing circuit 405.

The decryption instructing circuit 407 provides an instruction for the decryption processing portion 37 to decrypt the content data recorded according the instruction from the content data recording instructing circuit 402 using the encryption key acquired according to the instruction from the encryption key acquisition instructing circuit 406. The content data reproduction instructing circuit 408 provides an instruction for the reproduction portion 34 to reproduce the content data decrypted according to the instruction from the decryption instructing circuit 407.

In this embodiment, the recording control circuit 400 corresponds to an example of the recording control circuit, the content data reception instructing circuit 401 corresponds to an example of the first information reception instructing circuit, the content data recording instructing circuit 402 corresponds to an example of the first information recording instructing circuit, the encryption key identification information transmission instructing circuit 403 corresponds to an example of the encryption key identification information transmission instructing circuit, the CM data reception instructing circuit 404 corresponds to an example of the second information reception instructing circuit, the CM data reproduction instructing circuit 405 corresponds to an example of the second information reproduction instructing circuit, the encryption key acquisition instructing circuit 406 corresponds to an example of the acquisition instructing circuit, the decryption instructing circuit 407 corresponds to an example of the decryption instructing circuit, and the content data reproduction instructing circuit 408 corresponds to an example of the first information reproduction instructing circuit.

In the example described above, it is configured to store the coupled data in which the content data before decryption and the CM data are coupled to each other. The invention, however, is not particularly limited to this configuration, and it may be configured in such a manner so as to store the content data after decryption and the CM data that are coupled to each other.

The content recording device 3' may be configured not to include the coupled data storage portion 38, and the removable recording medium recording portion 39 may record the content data into a removable recording medium. In this case, the content management portion 32 outputs the content data stored in the content storage portion 33 to the removable recording medium recording portion 39 and controls a recording operation. Upon receipt of a reproduction instruction of the content data from the user, the content management portion 32 reads out the encryption key request timing appended to the content data recorded in the removable recording medium by means of the removable recording medium recording portion 39.

In the content recording device 3' of this embodiment, a recording program is stored, for example, in a ROM (Read Only Memory), and the recording program causes the CPU to function as the communication portion 31, the content management portion 32, the content storage portion 33, the reproduction portion 34, the encryption key acquisition portion 35, the encryption key storage portion 36, the decryption processing portion 37, the coupled data storage portion 38, and the removable recording medium recording portion 39.

Further, in this embodiment, information about a commercial message, such as CM, is provided as the second information. The invention, however, is not particularly limited to this configuration, and noncommercial information relating to the content the viewers are going to watch may be provided as the second information. For example, the first information providing server (content providing server 1) transmits encrypted game content data (first information) to the content reproduction device 3. The second information providing server (CM providing server 2) embeds encryption keys into additional information (second information), for example, an explanatory file to move onto the next stage or the like, that is downloaded at specific points within the game, for example, when the level is updated, the map is updated, and the scenario is updated, and transmits the resulting information to the content reproduction device 3. The content reproduction device 3 then acquires and reproduces the additional information at the specific points within the game to acquire the encryption keys contained in the additional information, and decrypts the game content.

Another embodiment of the invention will now be described. In the embodiment describe above, the encrypted content information and the encryption keys are transmitted to the CM providing server 2. However, in another embodiment, the encrypted content information is recorded in a computer-readable recording medium and the encryption keys alone are transmitted to the CM providing server 2.

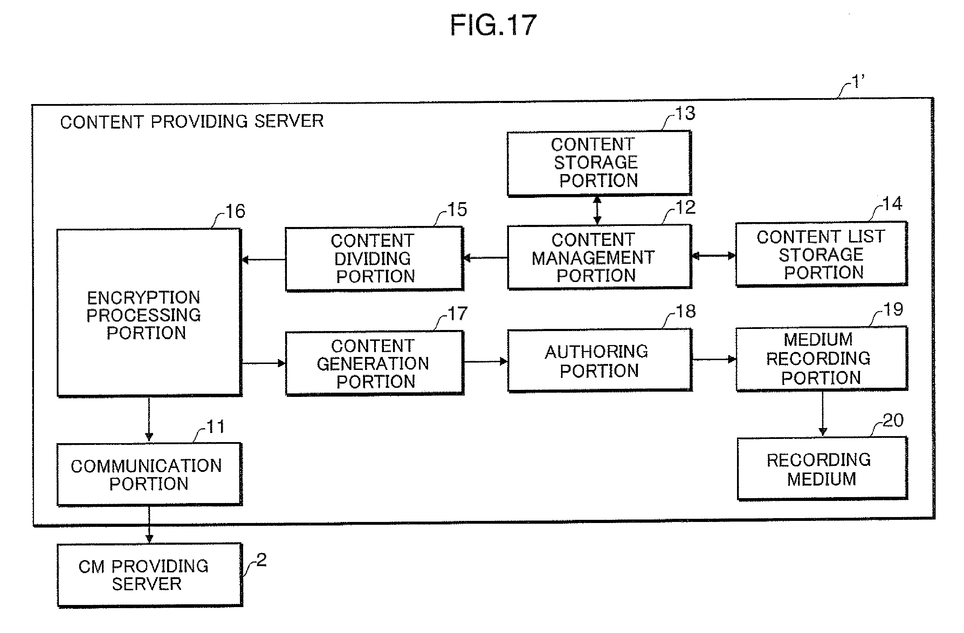

Fig. 17 is a block diagram showing the configuration of a content providing server of another embodiment. In Fig. 17, like configurations are labeled with like reference numerals with respect to the content providing server 1 shown in Fig. 2. Different configurations alone will be described in the following.

A content providing server 1' shown in Fig. 17 is formed by including a communication portion 11, a content management portion 12, a content storage portion 13, a content list storage portion 14, a content dividing portion 15, an encryption processing portion 16, and a content generation portion 17, an authoring portion 18, and a medium recording portion 19. In this embodiment, the authoring portion 18 and the medium recording portion 19 correspond to an example of the information recording means.

The authoring portion 18 converts content data to which the encryption key requesting timing, the CM data reproduction timing, and the encryption key ID are appended by the content generation portion 17 into a recording format compatible with a recording medium 20. The medium recording portion 19 records the content data into the recording medium 20. The recording medium 20 is distributed to the user. The communication portion 11 transmits to the CM providing server 2 encryption key information in which encryption keys used in the encryption processing portion 16 are correlated with encryption key ID's. Because the configuration of the CM providing server in the another embodiment is the same as the configuration of the CM providing server 2 shown in Fig. 4, descriptions thereof are omitted herein.

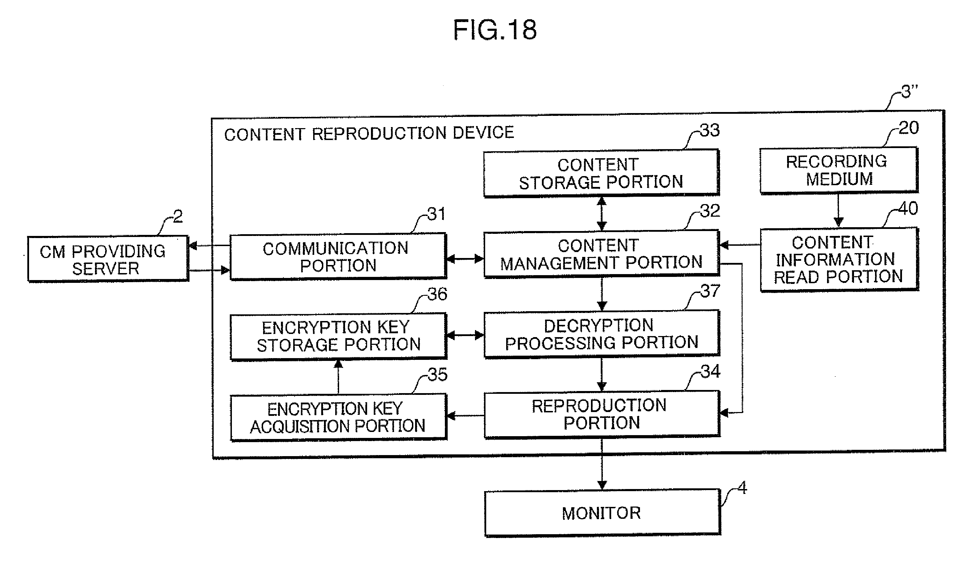

Fig. 18 is a block diagram showing the configuration of a content reproduction device in the another embodiment. In Fig, 18, like configurations are labeled with like reference numerals with respect to the content reproduction device 3 shown in Fig. 6. Different configurations alone will be described in the following.

A content reproduction device 3" shown in Fig. 18 is formed by including a communication portion 31, a content management portion 32, a content storage portion 33, a reproduction portion 34, an encryption key acquisition portion 35, an encryption key storage portion 36, a decryption processing portion 37, and a content information read portion 40. In this embodiment, the content information read portion 40 corresponds to an example of the first information reading means.

The content information read portion 40 reads out content data recorded in the recording medium 20 and outputs the content data to the content management portion 32. The recording medium 20 has recorded content data appended with the encryption key request timing, the CM data reproduction timing, and the encryption key ID.

The content storage portion 33 stores the content data read out by the content information read portion 40. The content management portion 32 stores the content data outputted by the content information read portion 40 into the content storage portion 33. The content management portion 32 reads out the encryption key request timing, the CM data reproduction timing, and the encryption key ID from the content data stored in the content storage portion 33. It then generates an encryption key request containing the encryption key ID according to the encryption key request timing, and outputs the encryption key request to the communication portion 31. The content management portion 32 outputs the content data (divided content data) outputted by the content information read portion 40 to the decryption processing portion 37.

The communication portion 31 transmits the encryption key request requesting the encryption key to the CM providing server 2, while it receives the CM data transmitted from the communication portion 21 in the CM providing server 2 and outputs the CM data to the content management portion 32.

As has been described, the content information to be reproduced in the content reproduction device 3" is encrypted with the use of the encryption key, and the encryption key ID to identify the encryption key used when encrypting the content information is appended to the encrypted content information. The content information appended with the encryption key ID is then recorded in the recording medium 20 while the encryption key is transmitted to the CM providing server 2.

Hence, because the content information recorded in the recording medium 20 cannot be decrypted and reproduced unless the encryption key is acquired, by embedding the encryption key into CM data in such a manner that the encryption key is not acquired unless the CM data is reproduced, it is possible to let the viewers watch the CM information that the CM provider wants watched by the viewers in a reliable manner.

In addition, the content information appended with the encryption key ID to identify the encryption key used when encrypting the content information is read out from the recording medium 20, and the encryption key ID appended to the content information thus read out is transmitted to the CM providing server 2. The CM data in which is embedded the encryption key corresponding to the encryption key ID is thus received. The CM data is then reproduced and the encryption key embedded in the reproduced CM data is acquired. Thereafter, the content information is decrypted with the use of the encryption key and the decrypted content information is reproduced.

Hence, because the content information recorded in the recording medium 20 cannot be decrypted and reproduced unless the encryption key is acquired by reproducing the CM data, it is possible to let the viewers watch CM information that the information provider wants watched by the viewers in a reliable manner. Also, because the CM data in which is embedded the encryption key corresponding to the encryption key ID appended to the content information is reproduced, by embedding the encryption key in the CM data that the information provider desires, it is possible to provide the viewers with the CM information that the information provider desires.

The specific embodiments described above chiefly include inventions having the following configurations.

An information management system according to an aspect of the invention is an information management system including a first information providing server that provides first information, a second information providing server that provides second information different from the first information, and a reproduction device that reproduces the first information provided from the first information providing server and the second information provided from the second information providing server, which are interconnected to enable mutual communications, wherein the first information providing server includes: encryption means for encrypting the first information using an encryption key; encryption key identification information appending means for appending encryption key identification information to identify the encryption key used when encrypting the first information to the first information encrypted by the encryption means; and transmission means for transmitting the first information to which the encryption key identification information is appended by the encryption key identification information appending means to the reproduction device and transmitting the encryption key to the second information providing server, wherein the second information providing server includes: encryption key reception means for receiving the encryption key transmitted by the transmission means in the first information providing server; embedding means for embedding the encryption key received by the encryption key reception means into the second information; encryption key identification information reception means for receiving the encryption key identification information transmitted from the reproduction device; and second information transmission means for transmitting the second information in which is embedded the encryption key corresponding to the encryption key identification information received by the encryption key identification information reception means to the reproduction device, and wherein the reproduction device includes: first information reception means for receiving the first information transmitted by the transmission means in the first information providing server; encryption key identification information transmission means for transmitting the encryption key identification information appended to the first information received by the first information reception means to the second information providing server; second information reception means for receiving the second information transmitted by the second information transmission means in the second information providing server; second information reproduction means for reproducing the second information received by the second information reception means; acquisition means for acquiring the encryption key embedded in the second information reproduced by the second information reproduction means; decryption means for decrypting the first information received by the first information reception means using the encryption key acquired by the acquisition means; and first information reproduction means for reproducing the first information decrypted by the decryption means.

An information management method according to another aspect of the invention is an information management method for a first information providing server including encryption means, encryption key identification information appending means, and transmission means and providing first information, a second information providing server including encryption key reception means, embedding means, encryption key identification information reception means, and second information transmission means and providing second information different from the first information, and a reproduction device including first information reception means, encryption key identification information transmission means, second information reception means, second information reproduction means, acquisition means, decryption means, and first information reproduction means and reproducing the first information provided from the first information providing server and the second information provided from the second information providing server, which are interconnected to enable mutual communications, including: an encrypting step of encrypting the first information with the use of an encryption key by the encryption means in the first information providing server; an encryption key identification information appending step of appending, by the encryption key identification information appending means, encryption key identification information to identify the encryption key used when encrypting the first information to the first information encrypted in the encrypting step; a transmitting step of transmitting the first information to which the encryption key identification information is appended in the encryption key identification information appending step to the reproduction device and transmitting the encryption key to the second information providing server by the transmission means; an encryption key receiving step of receiving, by the encryption key reception means in the second information providing server, the encryption key transmitted from the first information providing server in the transmitting step; an embedding step of embedding the encryption key received in the encryption key receiving step into the second information by the embedding means; a first information receiving step of receiving, by the first information reception means in the reproduction device, the first information transmitted from the first information providing server in the transmitting step; an encryption key identification information transmitting step of transmitting the encryption key identification information appended to the first information received in the first information receiving step to the second information providing server by the encryption key identification information transmission means; an encryption key identification information receiving step of receiving, by the encryption key identification information reception means in the second information providing server, the encryption key identification information transmitted from the reproduction device; a second information transmitting step of transmitting the second information in which is embedded the encryption key corresponding to the encryption key identification information received in the encryption key identification information receiving step to the reproduction device by the second information transmission means; a second information receiving step of receiving, by the second information reception means in the reproduction device, the second information transmitted from the second information providing server in the second information transmitting step; a second information reproducing step of reproducing, by the second information reproduction means, the second information received in the second information receiving step; an acquisition step of acquiring, by the acquisition means, the encryption key embedded in the second information reproduced in the second information reproducing step; a decrypting step of decrypting, by the decryption means, the first information received in the first information receiving step with the use of the encryption key acquired in the acquiring step; and a first information reproducing step of reproducing, by the first information reproduction means, the first information decrypted in the decrypting step.

According to these configurations, in the first information providing server, the first information is encrypted with the use of the encryption key, and the encryption key identification information to identify the encryption key used when encrypting the first information is appended to the encrypted first information. The first information appended with the encryption key identification information is transmitted to the reproduction device while the encryption key is transmitted to the second information providing server. Subsequently, in the second information providing server, the encryption key transmitted from the first information providing server is received and the received encryption key is embedded in the second information. The encryption key identification information transmitted from the reproduction device is received and the second information in which is embedded the encryption key corresponding to the received encryption key identification information is transmitted to the reproduction device. Subsequently, in the reproduction device, the first information transmitted from the first information providing server is received and the encryption key identification information appended to the received first information is transmitted to the second information providing server. Meanwhile, the second information transmitted from the second information providing server is received. Accordingly, the second information is reproduced, and the encryption key embedded in the reproduced second information is thus acquired. Subsequently, the first information is decrypted with the use of the encryption key and the decrypted first information is reproduced.

Hence, because the first information cannot be decrypted and reproduced unless the encryption key is acquired by reproducing the second information, it is possible to let the viewers watch the second information that the information provider wants watched by the viewers in a reliable manner. Also, because the second information in which is embedded the encryption key corresponding to the encryption key identification information appended to the first information is reproduced, by embedding the encryption key in the second information that the information provider desires, it is possible to provide the viewers with the second information that the information provider desires.

Also, in the information management system described above, it is preferable that the first information contains content data, and the second information contains commercial message data. According to this configuration, because the content data cannot be decrypted and reproduced unless the encryption key is acquired by reproducing the commercial message data, it is possible to let the viewers watch a commercial message that the information provider wants watched by the viewers in a reliable manner. In addition, because the commercial message in which is embedded the encryption key corresponding to the encryption key identification information appended to the content data is reproduced, by embedding the encryption key in the commercial message data that the information provider desires, it is possible to provide the viewers with a commercial message that the information provider desires.

Also, in the information management system described above, it is preferable that the first information providing server further includes dividing means for dividing the content data into plural divided content data; the encryption means encrypts respective divided content data divided by the dividing means using encryption keys; the encryption key identification information appending means appends encryption key identification information to identify the encryption keys used when encrypting the respective divided content data to the respective divided content data encrypted by the encryption means; the transmission means in the first information providing server transmits the respective divided content data to which the encryption key identification information is appended by the encryption key identification information appending means to the reproduction device and transmits the encryption keys to the second information providing server; the encryption key reception means in the second information providing server receives the encryption keys transmitted by the transmission means in the first information providing server; the embedding means embeds the encryption keys received by the encryption key reception means into respective commercial message data corresponding to the respective divided content data; the encryption key identification information reception means receives the encryption key identification information transmitted from the reproduction device; the second information transmission means transmits the commercial message data corresponding to the encryption key identification information received by the encryption key identification information reception means to the reproduction device; the first information reception means in the reproduction device receives the divided content data transmitted by the transmission means in the first information providing server; the encryption key identification information transmission means transmits the encryption key identification information appended to the divided content data received by the first information reception means to the second information providing server; the second information reception means receives the commercial message data transmitted by the second information transmission means in the second information providing server; the second information reproduction means reproduces the commercial message data received by the second information reception means; the acquisition means acquires the encryption keys embedded in the commercial message data reproduced by the second information reproduction means; the decryption means decrypts the divided content data received by the first information reception means using the encryption keys acquired by the acquisition means; and the first information reproduction means reproduces the divided content data decrypted by the decryption means.

According to this configuration, in the first information providing server, the content data is divided into plural divided content data, and the respective divided content data are encrypted with the use of encryption keys. Encryption key identification information to identify the encryption keys used when encrypting the respective divided content data is appended to the respective encrypted divided content data. The respective content data appended with the encryption key identification information are transmitted to the reproduction device while the encryption keys are transmitted to the commercial message providing server. Subsequently, in the commercial message providing server, the encryption keys transmitted from the first information providing server are received and the received encryption keys are embedded in the respective commercial message data corresponding to the respective divided content data. The encryption key identification information transmitted from the reproduction device is then received, and the commercial message data in which is embedded the encryption key corresponding to the received encryption key identification information is transmitted to the reproduction device. Subsequently, in the reproduction device, the divided content data transmitted from the first information providing server is received, and the encryption key identification information appended to the received divided content data is transmitted to the commercial message providing server. Meanwhile, the commercial message data transmitted from the commercial message providing server is received. Accordingly, the commercial message data is reproduced and the encryption key embedded in the reproduced commercial message data is thus acquired. Subsequently, the divided content data is decrypted with the use of the encryption key and the encrypted divided content data is reproduced.

Hence, the encryption keys identification information is appended to each of the divided content data obtained by dividing one content data into plural parts, and the commercial message in which is embedded the encryption key corresponding to the encryption key identification information is reproduced. It is thus possible to provide the viewers with a desired commercial message for each divided content data.

In the information management system described above, it is preferable that the first information providing server further includes reproduction timing appending means for appending a reproduction timing at which a commercial message is reproduced to the content data encrypted by the encryption means, and that the commercial message data reproduction means in the reproduction device reproduces the commercial message data received by the commercial message data reception means according to the reproduction timing appended to the content data received by the first information reception means.

According to this configuration, in the first information providing server, the reproduction timing at which the commercial message is reproduced is appended to the encrypted content data, and in the reproduction device the commercial message data is reproduced at the reproduction timing appended to the content data. Hence, because the commercial message is reproduced according to the reproduction timing, it is possible to reproduce the commercial message at a desired timing.

Also, in the information management system described above, it is preferable that the first information providing server further includes reproduction position information appending means for appending reproduction position information that specifies a position on a display screen at which the commercial message data is to be reproduced to the content data encrypted by the encryption means, and that the second information reproduction means in the reproduction device reproduces the commercial message data received by the second information reception means on the display screen at the position determined according to the reproduction position information appended to the content data received by the first information reception means.

According to this configuration, in the first information providing server, the reproduction position information specifying the position on the display screen at which is reproduced the commercial message data is appended to the encrypted content data, and in the reproduction device, the commercial message data is reproduced on the display screen at the position determined according to the reproduction position information appended to the content data. It is thus possible to reproduce the commercial message on the display screen at a desired position instead of reproducing the commercial message on the entire display screen.

Also, in the information management system described above, it is preferable that the embedding means embeds the encryption key into the commercial message data in line with a content of the content data. According to this configuration, because the encryption key is embedded in the commercial message data in line with the content of the content data, it is possible to provide the viewers with a commercial message in line with the content of the content data they are going to watch, which can enhance the advertisement effect of the commercial message.

Also, in the information management system, it is preferable that the embedding means embeds the encryption key into the commercial message data that suits a user's taste. According to this configuration, because the encryption key is embedded in the commercial message data that suits the user's taste, it is possible to provide the user with a commercial message that suits the user's taste, which makes it possible to provide a commercial message that the user desires.

In the information management system, it is preferable that the embedding means embeds the encryption key into a sample value or a frequency component of moving image information, still image information, or sound information of the commercial message data as digital watermark information.

According to this configuration, the encryption key is embedded in the sample value or the frequency component of the moving image information, the still image information, or the sound information of the commercial message data as the digital watermark information. It is thus possible to reproduce the commercial message data without letting the user be aware that the encryption key is embedded in the commercial message data.

Also, in the information management system, it is preferable that the acquisition means acquires the encryption key from the digital watermark information embedded in the sample value or the frequency component of the moving image information, the still image information, or the sound information of the commercial message data.

According to this configuration, the encryption key is acquired from the digital watermark information embedded in the sample value or the frequency component of the moving image information, the still image information, or the sound information of the commercial message data. It is thus possible to reproduce the commercial message data without letting the user be aware that the encryption key is embedded in the commercial message data.

Also, in the information management system described above, it is preferable that the reproduction device further includes storage means for storing the commercial message data received by the second information reception means or the encryption key acquired by the acquisition means in correlation with the encryption key identification information appended to the first information received by the first information reception means.

According to this configuration, because the commercial message data or the encryption key is stored in correlation with the encryption key identification information appended to the content data, it is possible to eliminate the need to receive the encryption key each time the content data is reproduced. The number of accesses to the second information providing server can be therefore reduced, which can in turn reduce a network load.

An information providing server according to still another aspect of the invention includes: encryption means for encrypting information to be reproduced in a reproduction device using an encryption key; encryption key identification information appending means for appending encryption key identification information to identify the encryption key used when encrypting the information to the information encrypted by the encryption means; and transmission means for transmitting the information to which the encryption key identification information is appended by the encryption key identification information appending means and the encryption keys.

An information providing method according to still another aspect of the invention includes: an encrypting step of encrypting information to be reproduced in a reproduction device by encryption means with the use of an encryption key; an encryption key identification information appending step of appending, by encryption key identification information appending means, encryption key identification information to identify the encryption key used when encrypting the information to the information encrypted in the encrypting step; and a transmitting step of transmitting the information to which the encryption key identification information is appended in the encryption key identification information appending step and the encryption key by transmission means.

According to these configurations, the information to be reproduced in the reproduction device is encrypted with the use of the encryption key, and the encryption key identification information to identify the encryption key used when encrypting the information is appended to the encrypted information. The information appended with the encryption key identification information and the encryption keys are then transmitted.

Hence, because the information cannot be decrypted and reproduced unless the encryption key is acquired, by embedding the encryption key in another information in such a manner that the encryption key is not acquired unless the another information is reproduced, it is possible to let the viewers watch the another information that the information provider wants watched by the viewers in a reliable manner.

An information providing server according to still another aspect of the invention includes: encryption means for encrypting information to be reproduced in a reproduction device using an encryption key; encryption key identification information appending means for appending encryption key identification information to identify the encryption key used when encrypting the information to the information encrypted by the encryption means; information recording means for recording the information to which the encryption key identification information is appended by the encryption key identification information appending means into a recording medium; and transmission means for transmitting the encryption key.

According to this configuration, the information to be reproduced in the reproduction device is encrypted with the use of the encryption key, and the encryption key identification information to identify the encryption key used when encrypting the information is appended to the encrypted information. The information appended with the encryption key identification information is recorded in a recording medium while the encryption key is transmitted.

Hence, because the information recorded in the recording medium cannot be decrypted and reproduced unless the encryption key is acquired, by embedding the encryption key in another information in such a manner that the encryption key is not acquired unless the another information is reproduced, it is possible to let the viewers watch the another information that the information provider wants watched by the viewers in a reliable manner.

An information providing server according to still another aspect of the invention includes: encryption key reception means for receiving an encryption key used when encrypting first information; embedding means for embedding the encryption key received by the encryption key reception means into second information different from the first information; encryption key identification information reception means for receiving encryption key identification information to identify the encryption key; and second information transmission means for transmitting the second information in which is embedded the encryption key corresponding to the encryption key identification information received by the encryption key identification information reception means.

An information providing method according to still another aspect of the invention includes: an encryption key receiving step of receiving, by encryption key reception means, an encryption key used when encrypting first information; an embedding step of embedding the encryption key received in the encryption key receiving step into second information different from the first information by embedding means; an encryption key identification information receiving step of receiving encryption key identification information to identify the encryption key by encryption key identification information reception means; and a second information transmitting step of transmitting, by second information transmission means, the second information in which is embedded the encryption key corresponding to the encryption key identification information received in the encryption key identification information receiving step.

According to these configurations, the encryption key used when encrypting the first information is received and the received encryption key is embedded in the second information different from the first information. The encryption key identification information to identify the encryption key used when encrypting the first information is thus received, and the second information in which is embedded the encryption key corresponding to the received encryption key identification information is transmitted.

Hence, because the first information cannot be decrypted and reproduced unless the encryption key is acquired, by embedding the encryption key in the second information in such a manner that the encryption key is not acquired unless the second information is reproduced, it is possible to let the viewers watch the second information that the information provider wants watched by the viewers in a reliable manner.

A reproduction device according to still another aspect of the invention includes: first information reception means for receiving first information to which is appended encryption key identification information to identify an encryption key used when encrypting the first information: encryption key identification information transmission means for transmitting the encryption key identification information appended to the first information received by the first information reception means; second information reception means for receiving second information which is different from the first information and in which the encryption key corresponding to the encryption key identification information is embedded; second information reproduction means for reproducing the second information received by the second information reception means; acquisition means for acquiring the encryption key embedded in the second information reproduced by the second information reproduction means; decryption means for decrypting the first information received by the first information reception means using the encryption key acquired by the acquisition means; and first information reproduction means for reproducing the first information decrypted by the decryption means.

A reproduction method according to still another aspect of the invention includes: a first information receiving step of receiving, by first information reception means, first information to which is appended encryption key identification information to identify an encryption key used when encrypting the first information; an encryption key identification information transmitting step of transmitting, by encryption key identification information transmission means, the encryption key identification information appended to the first information received in the first information receiving step; a second information receiving step of receiving, by second information reception means, second information which is different from the first information and in which the encryption key corresponding to the encryption key identification information is embedded; a second information reproducing step of reproducing, by second information reproduction means, the second information received in the second information receiving step; an acquiring step of acquiring, by acquisition means, the encryption key embedded in the second information reproduced in the second information reproducing step; a decrypting step of decrypting, by decryption means, the first information received in the first information receiving step using the encryption key acquired in the acquiring step; and a first information reproducing step of reproducing, by first information reproduction means, the first information decrypted in the decrypting step.

A reproduction program according to still another aspect of the invention causes a computer to function as: first information reception means for receiving first information to which is appended encryption key identification information to identify an encryption key used when encrypting the first information; encryption key identification information transmission means for transmitting the encryption key identification information appended to the first information received by the first information reception means; second information reception means for receiving second information which is different from the first information and in which the encryption key corresponding to the encryption key identification information is embedded; second information reproduction means for reproducing the second information received by the second information reception means; acquisition means for acquiring the encryption key embedded in the second information reproduced by the second information reproduction means; decryption means for decrypting the first information received by the first information reception means using the encryption key acquired by the acquisition means; and first information reproduction means for reproducing the first information decrypted by the decryption means.

A computer-readable recording medium having recorded a reproduction program according to still another aspect of the invention has recorded a reproduction program that causes a computer to function as: first information reception means for receiving first information to which is appended encryption key identification information to identify an encryption key used when encrypting the first information; encryption key identification information transmission means for transmitting the encryption key identification information appended to the first information received by the first information reception means; second information reception means for receiving second information which is different from the first information and in which the encryption key corresponding to the encryption key identification information is embedded; second information reproduction means for reproducing the second information received by the second information reception means; acquisition means for acquiring the encryption key embedded in the second information reproduced by the second information reproduction means; decryption means for decrypting the first information received by the first information reception means using the encryption key acquired by the acquisition means; and first information reproduction means for reproducing the first information decrypted by the decryption means.

A reproduction control circuit according to still another aspect of the invention includes: a first information reception instructing circuit that provides an instruction to receive first information to which is appended encryption key identification information to identify an encryption key used when encrypting the first information; an encryption key identification information transmission instructing circuit that provides an instruction to transmit the encryption key identification information appended to the first information received according to the instruction from the first information reception instructing circuit; a second information reception instructing circuit that provides an instruction to receive second information which is different from the first information and in which the encryption key corresponding to the encryption key identification information is embedded; a second information reproduction instructing circuit that provides an instruction to reproduce the second information received according to the instruction from the second information reception instructing circuit; an acquisition instructing circuit that provides an instruction to acquire the encryption key embedded in the second information reproduced according to the instruction from the second information reproduction instructing circuit; a decryption instructing circuit that provides an instruction to decrypt the first information received according to the instruction from the first information reception instructing circuit using the encryption key acquired according to the instruction from the acquisition instructing circuit; and a first information reproduction instructing circuit that provides an instruction to reproduce the first information decrypted according to the instruction from the decryption instructing circuit.

According to these configurations, the first information appended with the encryption key identification information to identify the encryption key used when encrypting the first information is received, and the encryption key identification information appended to the received first information is transmitted. Meanwhile, the second information which is different from the first information and in which is embedded the encryption key corresponding to the encryption key identification information is received. Accordingly, the second information is reproduced and the encryption key embedded in the reproduced second information is thus acquired. Subsequently, the first information is decrypted with the use of the encryption key and the decrypted first information is reproduced.

Hence, because the first information cannot be decrypted and reproduced unless the encryption key is acquired by reproducing the second information, it is possible to let the viewers watch the second information that the information provider wants watched by the viewers in a reliable manner. In addition, because the second information in which is embedded the encryption key corresponding to the encryption key identification information appended to the first information is reproduced, by embedding the encryption key in the second information that the information provider desires, it is possible to provide the viewers with the second information that the information provider desires.

A reproduction device according to still another aspect of the invention includes: first information reading means for reading out first information to which is appended encryption key identification information to identify an encryption key used when encrypting the first information from a recording medium having recorded the first information; encryption key identification information transmission means for transmitting the encryption key identification information appended to the first information read out by the first information reading means; second information reception means for receiving second information which is different from the first information and in which the encryption key corresponding to the encryption key identification information is embedded; second information reproduction means for reproducing the second information received by the second information reception means; acquisition means for acquiring the encryption key embedded in the second information reproduced by the second information reproduction means; decryption means for decrypting the first information read out by the first information reading means using the encryption key acquired by the acquisition means; and first information reproduction means for reproducing the first information decrypted by the decryption means.

According to this configuration, the first information to which is appended the encryption key identification information to identify the encryption key used when encrypting the first information is read out from a recording medium, and the encryption key identification information appended to the first information thus read out is transmitted. Meanwhile, the second information which is different from the first information and in which is embedded the encryption key corresponding to the encryption key identification information is received. Accordingly, the second information is reproduced and the encryption key embedded in the reproduced second information is thus acquired. Subsequently, the first information is decrypted with the use of the encryption key and the decrypted first information is reproduced.

Hence, because the first information recorded in the recording medium cannot be decrypted and reproduced unless the encryption key is acquired by reproducing the second information, it is possible to let the viewers watch the second information that the information provider wants watched by the viewers in a reliable manner. In addition, because the second information in which is embedded the encryption key corresponding to the encryption key identification information appended to the first information is reproduced, by embedding the encryption key in the second information that the information provider desires, it is possible to provide the viewers with the second information that the information provider desires.

A recording device according to still another aspect of the invention includes: first information reception means for receiving first information to which is appended encryption key identification information to identify an encryption key used when encrypting the first information; first information recording means for recording the first information received by the first information reception means; encryption key identification information transmission means for transmitting the encryption key identification information appended to the first information recorded by the first information recording means; second information reception means for receiving second information which is different from the first information and in which the encryption key corresponding to the encryption key identification information is embedded; second information reproduction means for reproducing the second information received by the second information reception means; acquisition means for acquiring the encryption key embedded in the second information reproduced by the second information reproduction means; decryption means for decrypting the first information recorded by the first information recording means using the encryption key acquired by the acquisition means; and first information reproduction means for reproducing the first information decrypted by the decryption means.

A recording method according to still another aspect of the invention includes: a first information receiving step of receiving, by first information reception means, first information to which is appended encryption key identification information to identify an encryption key used when encrypting the first information; a content data recording step of recording, by first information recording means, the first information received in the first information receiving step; an encryption key identification information transmitting step of transmitting, by encryption key identification information transmission means, the encryption key identification information appended to the first information recorded in the first information recording step; a second information receiving step of receiving, by second information reception means, second information which is different from the first information and in which the encryption key corresponding to the encryption key identification information is embedded; a second information reproducing step of reproducing, by second information reproduction means, the second information received in the second information receiving step; an acquiring step of acquiring, by acquisition means, the encryption key embedded in the second information reproduced in the second information reproducing step; a decrypting step of decrypting, by decryption means, the first information recorded in the first information recording step with the use of the encryption key acquired in the acquiring step; and a first information reproducing step of reproducing, by first information reproduction means, the first information decrypted in the decrypting step.

A recording program according to still another aspect of the invention causes a computer to function as: first information reception means for receiving first information to which is appended encryption key identification information to identify an encryption key used when encrypting the first information; first information recording means for recording the first information received by the first information reception means; encryption key identification information transmission means for transmitting the encryption key identification information appended to the first information recorded by the first information recording means; second information reception means for receiving second information which is different from the first information and in which the encryption key corresponding to the encryption key identification information is embedded; second information reproduction means for reproducing the second information received by the second information reception means; acquisition means for acquiring the encryption key embedded in the second information reproduced by the second information reproduction means; decryption means for decrypting the first information recorded by the first information recording means using the encryption key acquired by the acquisition means; and first information reproduction means for reproducing the first information decrypted by the decryption means.

A computer-readable recording medium having recorded a recording program according to still another aspect of the invention has recorded a recording program that causes a computer to function as: first information reception means for receiving first information to which is appended encryption key identification information to identify an encryption key used when encrypting the first information; first information recording means for recording the first information received by the first information reception means; encryption key identification information transmission means for transmitting the encryption key identification information appended to the first information recorded by the first information recording means; second information reception means for receiving second information which is different from the first information and in which the encryption key corresponding to the encryption key identification information is embedded; second information reproduction means for reproducing the second information received by the second information reception means; acquisition means for acquiring the encryption key embedded in the second information reproduced by the second information reproduction means; decryption means for decrypting the first information recorded by the first information recording means using the encryption key acquired by the acquisition means; and first information reproduction means for reproducing the first information decrypted by the decryption means.

A recording control circuit according to still another aspect of the invention includes: a first information reception instructing circuit that provides an instruction to receive first information to which is appended encryption key identification information to identify an encryption key used when encrypting the first information; a first information recording instructing circuit that provides an instruction to record the first information received according to the instruction from the first information reception instructing circuit; an encryption key identification information transmission instructing circuit that provides an instruction to transmit the encryption key identification information appended to the first information recorded according to the instruction from the first information recording instructing circuit; a second information reception instructing circuit that provides an instruction to receive second information which is different from the first information and in which the encryption key corresponding to the encryption key identification information is embedded; a second information reproduction instructing circuit that provides an instruction to reproduce the second information received according to the instruction from the second information reception instructing circuit; an acquisition instructing circuit that provides an instruction to acquire the encryption key embedded in the second information reproduced according to the instruction from the second information reproduction instructing circuit; a decryption instructing circuit that provides an instruction to decrypt the first information recorded according to the instruction from the first information recording instructing circuit using the encryption key acquired according to the instruction from the acquisition instructing circuit; and a first information reproduction instructing circuit that provides an instruction to reproduce the first information decrypted according to the instruction from the decryption instructing circuit.

According to these configurations, the first information appended with the encryption key identification information to identify the encryption key used when encrypting the first information is received, and the received first information is recorded while the encryption key identification information appended to the first information is transmitted. Meanwhile, the second information which is different from the first information and in which is embedded the encryption key corresponding to the encryption key identification information is received. Accordingly, the second information is reproduced and the encryption key embedded in the reproduced second information is thus acquired. Subsequently, the first information is decrypted with the use of the encryption key, and the decrypted first information is reproduced.

Hence, because the first information cannot be decrypted and reproduced unless the encryption key is acquired by reproducing the second information, it is possible to let the viewers watch the second information that the information provider wants watched by the viewers in a reliable manner. In addition, because the second information in which is embedded the encryption key corresponding to the encryption key identification information appended to the first information is reproduced, by embedding the encryption key in the second information that the information provider desires, it is possible to provide the viewers with the second information that the information provider desires. Further, because the first information is recorded, in a case where the first information is reproduced more than once, it is possible to eliminate the need to receive the first information each time the first information is reproduced. It is thus possible to shorten a time needed to receive the first information, which can in turn reduce a network load.

In the recording device described above, it is preferable that it further includes coupling recording means for recording the first information recorded by the first information recording means and the second information received by the second information reception means that are coupled to each other.

According to this configuration, because the first information and the second information coupled to each other are recorded, it is possible to record the data in which the first information and the second information is coupled to each other in a removable recording medium. In addition, even in a circumstance where the second information cannot be received, the first information recorded in the removable recording medium can be reproduced.

### Industrial Applicability

The information management system, the information management method, the information providing server, the information providing method, the reproduction device, the reproduction method, the reproduction program, the computer-readable recording medium having recorded the reproduction program, the reproduction control circuit, the recording device, the recording method, the recording program, the computer-readable recording medium having recorded the recording program, and the recording control circuit of the invention not only let the viewers watch the information that the information provider wants watched by the viewers in a reliable manner, but also make it possible to provide the viewers with information that the information provider desires. Hence, they are useful as an information management system including a first information providing server that provides first information, a second information providing server that provides second information different from the first information, and a reproduction device that reproduces the first information provided from the first information providing server and the second information provided from the second information providing server, which are interconnected to enable mutual communications, and an information management method; an information providing server and an information providing method for providing information; a reproduction device, a reproduction method, a reproduction program, a computer-readable medium having recorded the reproduction program, and a reproduction control circuit for reproducing information; and a recording device, a recording method, a recording program, a computer-readable recording medium having recorded the recording program, and a recording control circuit for recording information; and so forth.

## Claims

1. An information management system comprising a first information providing server that provides first information, a second information providing server that provides second information different from the first information, and a reproduction device that reproduces the first information provided from the first information providing server and the second information provided from the second information providing server, which are interconnected to enable mutual communications, **characterized in that**:
the first information providing server includes,
encryption means for encrypting the first information using an encryption key,
encryption key identification information appending means for appending encryption key identification information to identify the encryption key used when encrypting the first information to the first information encrypted by the encryption means, and
transmission means for transmitting the first information to which the encryption key identification information is appended by the encryption key identification information appending means to the reproduction device and transmitting the encryption key to the second information providing server;
the second information providing server includes,
encryption key reception means for receiving the encryption key transmitted by the transmission means in the first information providing server,
embedding means for embedding the encryption key received by the encryption key reception means into the second information,
encryption key identification information reception means for receiving the encryption key identification information transmitted from the reproduction device, and
second information transmission means for transmitting the second information in which is embedded the encryption key corresponding to the encryption key identification information received by the encryption key identification information reception means to the reproduction device; and
the reproduction device includes,
first information reception means for receiving the first information transmitted by the transmission means in the first information providing server,
encryption key identification information transmission means for transmitting the encryption key identification information appended to the first information received by the first information reception means to the second information providing server,
second information reception means for receiving the second information transmitted by the second information transmission means in the second information providing server,
second information reproduction means for reproducing the second information received by the second information reception means,
acquisition means for acquiring the encryption key embedded in the second information reproduced by the second information reproduction means,
decryption means for decrypting the first information received by the first information reception means using the encryption key acquired by the acquisition means, and
first information reproduction means for reproducing the first information decrypted by the decryption means.

2. The information management system according to Claim 1, wherein:
the first information contains content data; and
the second information contains commercial message data.

3. The information management system according to Claim 2, wherein:
the first information providing server further includes dividing means for dividing the content data into plural divided content data;
the encryption means encrypts respective divided content data divided by the dividing means using encryption keys;
the encryption key identification information appending means appends encryption key identification information to identify the encryption keys used when encrypting the respective divided content data to the respective divided content data encrypted by the encryption means;
the transmission means in the first information providing server transmits the respective divided content data to which the encryption key identification information is appended by the encryption key identification information appending means to the reproduction device and transmits the encryption keys to the second information providing server;
the encryption key reception means in the second information providing server receives the encryption keys transmitted by the transmission means in the first information providing server;
the embedding means embeds the encryption keys received by the encryption key reception means into respective commercial message data corresponding to the respective divided content data;
the encryption key identification information reception means receives the encryption key identification information transmitted from the reproduction device;
the second information transmission means transmits the commercial message data corresponding to the encryption key identification information received by the encryption key identification information reception means to the reproduction device;
the first information reception means in the reproduction device receives the divided content data transmitted by the transmission means in the first information providing server;
the encryption key identification information transmission means transmits the encryption key identification information appended to the divided content data received by the first information reception means to the second information providing server;
the second information reception means receives the commercial message data transmitted by the second information transmission means in the second information providing server;
the second information reproduction means reproduces the commercial message data received by the second information reception means;
the acquisition means acquires the encryption keys embedded in the commercial message data reproduced by the second information reproduction means;
the decryption means decrypts the divided content data received by the first Information reception means using the encryption keys acquired by the acquisition means; and
the first information reproduction means reproduces the divided content data decrypted by the decryption means.

4. The information management system according to Claim 2, wherein:
the first information providing server further includes reproduction timing appending means for appending a reproduction timing at which a commercial message is reproduced to the content data encrypted by the encryption means; and
the second information reproduction means in the reproduction device reproduces the commercial message data received by the second information reception means according to the reproduction timing appended to the content data received by the first information reception means.

5. The information management system according to Claim 2, wherein:
the first information providing server further includes reproduction position information appending means for appending reproduction position information that specifies a position on a display screen at which the commercial message data is to be reproduced to the content data encrypted by the encryption means; and
the second information reproduction means in the reproduction device reproduces the commercial message data received by the second information reception means on the display screen at the position determined according to the reproduction position information appended to the content data received by the first information reception means.

6. The information management system according to Claim 2, wherein:
the embedding means embeds the encryption key into the commercial message data in line with a content of the content data.

7. The information management system according to Claim 2, wherein:
the embedding means embeds the encryption key into the commercial message data that suits a user's taste.

8. The information management system according to Claim 2, wherein:
the embedding means embeds the encryption key into a sample value or a frequency component of moving image information, still image information, or sound information of the commercial message data as digital watermark information.

9. The information management system according to Claim 2, wherein:
the acquisition means acquires the encryption key from the digital watermark information embedded in the sample value or the frequency component of the moving image information, the still image information, or the sound information of the commercial message data.

10. The information management system according to Claim 2, wherein:
the reproduction device further includes storage means for storing the commercial message data received by the second information reception means or the encryption key acquired by the acquisition means in correlation with the encryption key identification information appended to the first information received by the first information reception means.

11. An information management method for a first information providing server including encryption means, encryption key identification information appending means, and transmission means and providing first information, a second information providing server including encryption key reception means, embedding means, encryption key identification information reception means, and second information transmission means and providing second information different from the first information, and a reproduction device including first information reception means, encryption key identification information transmission means, second information reception means, second information reproduction means, acquisition means, decryption means, and first information reproduction means and reproducing the first information provided from the first information providing server and the second information provided from the second information providing server, which are interconnected to enable mutual communications, the information management method being **characterized by** comprising:
an encrypting step of encrypting the first information with the use of an encryption key by the encryption means in the first information providing server;
an encryption key identification information appending step of appending, by the encryption key identification information appending means, encryption key identification information to identify the encryption key used when encrypting the first information to the first information encrypted in the encrypting step;
a transmitting step of transmitting the first information to which the encryption key identification information is appended in the encryption key identification information appending step to the reproduction device and transmitting the encryption key to the second information providing server by the transmission means;
an encryption key receiving step of receiving, by the encryption key reception means in the second information providing server, the encryption key transmitted from the first information providing server in the transmitting step;
an embedding step of embedding the encryption key received in the encryption key receiving step into the second information by the embedding means:
a first information receiving step of receiving, by the first information reception means in the reproduction device, the first information transmitted from the first information providing server in the transmitting step;
an encryption key identification information transmitting step of transmitting the encryption key identification information appended to the first information received in the first information receiving step to the second information providing server by the encryption key identification information transmission means;
an encryption key identification information receiving step of receiving, by the encryption key identification information reception means in the second information providing server, the encryption key identification information transmitted from the reproduction device;
a second information transmitting step of transmitting the second information in which is embedded the encryption key corresponding to the encryption key identification information received in the encryption key identification information receiving step to the reproduction device by the second information transmission means; a second information receiving step of receiving, by the second information reception means in the reproduction device, the second information transmitted from the second information providing server in the second information transmitting step;
a second information reproducing step of reproducing the second information received in the second information receiving step by the second information reproduction means; an acquisition step of acquiring, by the acquisition means, the encryption key embedded in the second information reproduced in the second information reproducing step;
a decrypting step of decrypting, by the decryption means, the first information received in the first information receiving step with the use of the encryption key acquired in the acquiring step; and
a first information reproducing step of reproducing, by the first information reproduction means, the first information decrypted in the decrypting step.

12. An information providing server, **characterized by** comprising:
encryption means for encrypting information to be reproduced in a reproduction device using an encryption key;
encryption key identification information appending means for appending encryption key identification information to identify the encryption key used when encrypting the information to the information encrypted by the encryption means; and
transmission means for transmitting the information to which the encryption key identification information is appended by the encryption key identification information appending means and the encryption key.

13. An information providing method, **characterized by** comprising:
an encrypting step of encrypting information to be reproduced in a reproduction device by encryption means with the use of an encryption key;
an encryption key identification information appending step of appending, by encryption key identification information appending means, encryption key identification information to identify the encryption key used when encrypting the information to the information encrypted in the encrypting step; and
a transmitting step of transmitting the information to which the encryption key identification information is appended in the encryption key identification information appending step and the encryption key by transmission means.

14. An information providing server, **characterized by** comprising:
encryption means for encrypting information to be reproduced in a reproduction device using an encryption key;
encryption key identification information appending means for appending encryption key identification information to identify the encryption key used when encrypting the information to the information encrypted by the encryption means;
information recording means for recording the information to which the encryption key identification information is appended by the encryption key identification information appending means into a recording medium; and
transmission means for transmitting the encryption key.

15. An information providing server, **characterized by** comprising:
encryption key reception means for receiving an encryption key used when encrypting first information;
embedding means for embedding the encryption key received by the encryption key reception means into second information different from the first information;
encryption key identification information reception means for receiving encryption key identification information to identify the encryption key; and
second information transmission means for transmitting the second information in which is embedded the encryption key corresponding to the encryption key identification information received by the encryption key identification information reception means.

16. An information providing method, **characterized by** comprising:
an encryption key receiving step of receiving, by encryption key reception means, an encryption key used when encrypting first information;
an embedding step of embedding the encryption key received in the encryption key receiving step into second information different from the first information by embedding means;
an encryption key identification information receiving step of receiving encryption key identification information to identify the encryption key by encryption key identification information reception means; and
a second information transmitting step of transmitting, by second information transmission means, the second information in which is embedded the encryption key corresponding to the encryption key identification information received in the encryption key identification information receiving step.

17. A reproduction device, **characterized by** comprising:
first information reception means for receiving first information to which is appended encryption key identification information to identify an encryption key used when encrypting the first information;
encryption key identification information transmission means for transmitting the encryption key identification information appended to the first information received by the first information reception means;
second information reception means for receiving second information which is different from the first information and in which the encryption key corresponding to the encryption key identification information is embedded;
second information reproduction means for reproducing the second information received by the second information reception means;
acquisition means for acquiring the encryption key embedded in the second information reproduced by the second information reproduction means;
decryption means for decrypting the first information received by the first information reception means using the encryption key acquired by the acquisition means; and
first information reproduction means for reproducing the first information decrypted by the decryption means.

18. A reproduction method, **characterized by** comprising:
a first information receiving step of receiving, by first information reception means, first information to which is appended encryption key identification information to identify an encryption key used when encrypting the first information;
an encryption key identification information transmitting step of transmitting, by encryption key identification information transmission means, the encryption key identification information appended to the first information received in the first information receiving step;
a second information receiving step of receiving, by second information reception means, second information which is different from the first information and in which the encryption key corresponding to the encryption key identification information is embedded;
a second information reproducing step of reproducing, by second information reproduction means, the second information received in the second information receiving step;
an acquiring step of acquiring, by acquisition means, the encryption key embedded in the second information reproduced in the second information reproducing step;
a decrypting step of decrypting, by decryption means, the first information received in the first information receiving step with the use of the encryption key acquired in the acquiring step; and
a first information reproducing step of reproducing, by first information reproduction means, the first information decrypted in the decrypting step.

19. A reproduction program, **characterized by** causing a computer to function as:
first information reception means for receiving first information to which is appended encryption key identification information to identify an encryption key used when encrypting the first information;
encryption key identification information transmission means for transmitting the encryption key identification information appended to the first information received by the first information reception means;
second information reception means for receiving second information which is different from the first information and in which the encryption key corresponding to the encryption key identification information is embedded;
second information reproduction means for reproducing the second information received by the second information reception means;
acquisition means for acquiring the encryption key embedded in the second information reproduced by the second information reproduction means;
decryption means for decrypting the first information received by the first information reception means using the encryption key acquired by the acquisition means; and
first information reproduction means for reproducing the first information decrypted by the decryption means.

20. A computer-readable recording medium having recorded a reproduction program **characterized by** causing a computer to function as:
first information reception means for receiving first information to which is appended encryption key identification information to identify an encryption key used when encrypting the first information;
encryption key identification information transmission means for transmitting the encryption key identification information appended to the first information received by the first information reception means;
second information reception means for receiving second information which is different from the first information and in which the encryption key corresponding to the encryption key identification information is embedded;
second information reproduction means for reproducing the second information received by the second information reception means;
acquisition means for acquiring the encryption key embedded in the second information reproduced by the second information reproduction means;
decryption means for decrypting the first information received by the first information reception means using the encryption key acquired by the acquisition means; and
first information reproduction means for reproducing the first information decrypted by the decryption means.

21. A reproduction control circuit, **characterized by** comprising:
a first information reception instructing circuit that provides an instruction to receive first information to which is appended encryption key identification information to identify an encryption key used when encrypting the first information;
an encryption key identification information transmission instructing circuit that provides an instruction to transmit the encryption key identification information appended to the first information received according to the instruction from the first information reception instructing circuit;
a second information reception instructing circuit that provides an instruction to receive second information which is different from the first information and in which the encryption key corresponding to the encryption key identification information is embedded;
a second information reproduction instructing circuit that provides an instruction to reproduce the second information received according to the instruction from the second information reception instructing circuit;
an acquisition instructing circuit that provides an instruction to acquire the encryption key embedded in the second information reproduced according to the instruction from the second information reproduction instructing circuit;
a decryption instructing circuit that provides an instruction to decrypt the first information received according to the instruction from the first information reception instructing circuit using the encryption key acquired according to the instruction from the acquisition instructing circuit; and
a first information reproduction instructing circuit that provides an instruction to reproduce the first information decrypted according to the instruction from the decryption instructing circuit.

22. A reproduction device, **characterized by** comprising:
first information reading means for reading out from a recording medium first information to which is appended encryption key identification information to identify an encryption key used when encrypting the first information;
encryption key identification information transmission means for transmitting the encryption key identification information appended to the first information read out by the first information reading means;
second information reception means for receiving second information which is different from the first information and in which the encryption key corresponding to the encryption key identification information is embedded;
second information reproduction means for reproducing the second information received by the second information reception means;
acquisition means for acquiring the encryption key embedded in the second information reproduced by the second information reproduction means;
decryption means for decrypting the first information read out by the first information reading means using the encryption key acquired by the acquisition means; and
first information reproduction means for reproducing the first information decrypted by the decryption means.

23. A recording device, **characterized by** comprising:
first information reception means for receiving first information to which is appended encryption key identification information to identify an encryption key used when encrypting the first information;
first information recording means for recording the first information received by the first information reception means;
encryption key identification information transmission means for transmitting the encryption key identification information appended to the first information recorded by the first information recording means;
second information reception means for receiving second information which is different from the first information and in which the encryption key corresponding to the encryption key identification information is embedded;
second information reproduction means for reproducing the second information received by the second information reception means;
acquisition means for acquiring the encryption key embedded in the second information reproduced by the second information reproduction means;
decryption means for decrypting the first information recorded by the first information recording means using the encryption key acquired by the acquisition means; and
first information reproduction means for reproducing the first information decrypted by the decryption means.

24. The recording device according to Claim 23, further comprising:
coupling recording means for recording the first information recorded by the first information recording means and the second information received by the second information reception means that are coupled to each other.

25. A recording method, **characterized by** comprising:
a first information receiving step of receiving, by first information reception means, first information to which is appended encryption key identification information to identify an encryption key used when encrypting the first information;
a content data recording step of recording, by first information recording means, the first information received in the first information receiving step;
an encryption key identification information transmitting step of transmitting, by encryption key identification information transmission means, the encryption key identification information appended to the first information recorded in the first information recording step;
a second information receiving step of receiving, by second information reception means, second information which is different from the first information and in which the encryption key corresponding to the encryption key identification information is embedded;
a second information reproducing step of reproducing, by second information reproduction means, the second information received in the second information receiving step;
an acquiring step of acquiring, by acquisition means, the encryption key embedded in the second information reproduced in the second information reproducing step;
a decrypting step of decrypting, by decryption means, the first information recorded in the first information recording step with the use of the encryption key acquired in the acquiring step; and
a first information reproducing step of reproducing, by first information reproduction means, the first information decrypted in the decrypting step.

26. A recording program, **characterized by** causing a computer to function as:
first information reception means for receiving first information to which is appended encryption key identification information to identify an encryption key used when encrypting the first information;
first information recording means for recording the first information received by the first information reception means;
encryption key identification information transmission means for transmitting the encryption key identification information appended to the first information recorded by the first information recording means;
second information reception means for receiving second information which is different from the first information and in which the encryption key corresponding to the encryption key identification information is embedded;
second information reproduction means for reproducing the second information received by the second information reception means;
acquisition means for acquiring the encryption key embedded in the second information reproduced by the second information reproduction means;
decryption means for decrypting the first information recorded by the first information recording means using the encryption key acquired by the acquisition means; and
first information reproduction means for reproducing the first information decrypted by the decryption means.

27. A computer-readable recording medium having recorded a recording program **characterized by** causing a computer to function as:
first information reception means for receiving first information to which is appended encryption key identification information to identify an encryption key used when encrypting the first information;
first information recording means for recording the first information received by the first information reception means;
encryption key identification information transmission means for transmitting the encryption key identification information appended to the first information recorded by the first information recording means;
second information reception means for receiving second information which is different from the first information and in which the encryption key corresponding to the encryption key identification information is embedded;
second information reproduction means for reproducing the second information received by the second information reception means;
acquisition means for acquiring the encryption key embedded in the second information reproduced by the second information reproduction means;
decryption means for decrypting the first information recorded by the first information recording means using the encryption key acquired by the acquisition means; and
first information reproduction means for reproducing the first information decrypted by the decryption means.

28. A recording control circuit, **characterized by** comprising:
a first information reception instructing circuit that provides an instruction to receive first information to which is appended encryption key identification information to identify an encryption key used when encrypting the first information;
a first information recording instructing circuit that provides an instruction to record the first information received according to the instruction from the first information reception instructing circuit;
an encryption key identification information transmission instructing circuit that provides an instruction to transmit the encryption key identification information appended to the first information recorded according to the instruction from the first information recording instructing circuit;
a second information reception instructing circuit that provides an instruction to receive second information which is different from the first information and in which the encryption key corresponding to the encryption key identification information is embedded;
a second information reproduction instructing circuit that provides an instruction to reproduce the second information received according to the instruction from the second information reception instructing circuit;
an acquisition instructing circuit that provides an instruction to acquire the encryption key embedded in the second information reproduced according to the instruction from the second information reproduction instructing circuit;
a decryption instructing circuit that provides an instruction to decrypt the first information recorded according to the instruction from the first information recording instructing circuit using the encryption key acquired according to the instruction from the acquisition instructing circuit; and
a first information reproduction instructing circuit that provides an instruction to reproduce the first information decrypted according to the instruction from the decryption instructing circuit.
